# EUROPÄISCHE PATENTSCHRIFT

(11) **EP 3 945 046 B1**
(45) Veröffentlichungstag und Bekanntmachung des Hinweises auf die Patenterteilung: **19.11.2025**
(21) Anmeldenummer: 21187911.9
(22) Anmeldetag: 27.07.2021
(51) Int. Cl.: B65G 54/02, B65C 9/02, B67B 3/28, B67C 3/24, B41J 3/407

(54) **BEHÄLTERBEHANDLUNGSANLAGE**
CONTAINER HANDLING SYSTEM
INSTALLATION DE TRAITEMENT DES RÉCIPIENTS

(30) Priorität: 31.07.2020 DE 102020120279
(43) Veröffentlichungstag der Anmeldung: 02.02.2022
(60) Teilanmeldung: 25208747.3
(73) Patentinhaber: KRONES AG, 93073 Neutraubling (DE)
(72) Erfinder: Scherl, Stefan, 93073 Neutraubling (DE); Peutl, August, 93073 Neutraubling (DE); Bielmeier, Heinrich, 93073 Neutraubling (DE); Lauterbach, Florian, 93073 Neutraubling (DE); Laumer, Roland, 93073 Neutraubling (DE); Elsperger, Stefan, 93073 Neutraubling (DE); Neubauer, Michael, 93073 Neutraubling (DE); Kaiser, Alexander, 93073 Neutraubling (DE); Roidl, Wolfgang, 93073 Neutraubling (DE); Winzinger, Frank, 93073 Neutraubling (DE)
(74) Vertreter: v. Bezold & Partner Patentanwälte - PartG mbB

(56) Entgegenhaltungen:
- DE-A1- 102010 028 769
- DE-A1- 102014 214 697
- DE-A1- 102017 222 425
- DE-A1- 102018 203 667
- US-B2- 10 126 317

## Beschreibung

### Technisches Gebiet

Die Erfindung betrifft eine Behälterbehandlungsanlage mit mehreren Behandlungseinrichtungen zum Behandeln von Behältern.

### Technischer Hintergrund

Behälter werden in Abfüll- und Verpackungsanlagen auf fest definierten Transportbahnen durch die einzelnen Anlagenteile transportiert, dabei gefüllt, verschlossen, etikettiert, inspiziert und ausgeschleust, gruppiert und verpackt, und zwar mit einer aufgrund von Prozesszeiten eingestellten Ausstoßleistung. Die Transportstrecken zwischen den Anlagenteilen können zusätzlich als Puffer für eine Menge an Behältern dienen, um bei einem Stillstand eines Anlagenteils, beispielsweise aufgrund einer Störung, für kurze Zeit einen Stillstand der kompletten Anlage zu vermeiden.

In einer Linie können verschiedene Produkte nicht zeitgleich produziert werden. Durch mehr oder weniger aufwändige Umstell- bzw. Umrüstvorgänge kann ein anderes Produkt produziert werden. Die Produkte, welche auf einer Anlage produziert werden, können sich unterscheiden in Behälterart und -format, Inhalt und Ausstattung (Etikett oder Bedruckung). Die Chargen sind deshalb groß gewählt, was wiederum ein nachgeschaltetes Lager erfordert. Eine Kommissionierung von Mischgebinden oder Mischpaletten kann nachträglich durchgeführt werden.

Nachteilig an diesem bekannten Stand der Technik ist die "starre" Produktion von einem Produkt bei einem eingestellten bzw. gerüsteten Behälterformat. Eine Produktion ab Losgröße 1 ist nicht praktikabel bzw. unwirtschaftlich. Die Pufferstrecken zwischen den Anlagenteilen brauchen viel Platz. Das Anfahren und Leerfahren der Anlage dauert relativ lange, insbesondere aufgrund der langen Transport- und Pufferstrecken. Das Umrüsten auf ein anderes Produkt führt zu einem Stillstand der Anlage. Die nachgelagerte Kommissionierung bedeutet einen zusätzlichen Aufwand. Das Erstellen von Mischgebinden wird zudem teilweise manuell durch Bediener erledigt.

Die DE 10 2010 028769 A1 betrifft ein System zum Transportieren von Behältern zwischen unterschiedlichen Stationen, wobei die Behälter in Behälterträgern aufgenommen sind. Das System umfasst eine Steuereinheit, die den Transport der Behälterträger steuert, eine Transportfläche, die in Teilflächen unterteilt ist und auf der die Behälterträger beweglich anordenbar sind, und Antriebsmittel. Die Antriebsmittel sind durch die Steuereinheit angesteuert und einer jeweiligen Teilfläche ein jeweiliges Antriebsmittel zugeordnet ist, wobei ein jeweiliges Antriebsmittel dazu ausgebildet ist, einen zugehörigen Behälterträger mit einer Antriebskraft zu beaufschlagen.

Die US 10 126 317 B2 betrifft ein gattungsgemässes System zur Verteilung von Laborproben. Das Laborprobenverteilungssystem umfasst eine Vielzahl von Behälterträgern. Die Behälterträger umfassen jeweils mindestens eine magnetisch aktive Vorrichtung, wie z. B. mindestens einen Permanentmagneten, und tragen einen Probenbehälter, der eine Probe enthält. Das System umfasst ferner eine Transportebene zum Tragen der mehreren Behälterträger und eine Vielzahl von elektromagnetischen Aktuatoren, die stationär unter der Transportebene angeordnet sind. Die elektromagnetischen Aktuatoren bewegen einen Behälterträger auf der Transportebene, indem sie eine magnetische Kraft auf den Behälterträger ausüben.

Die WO 2018/049104 A1 offenbart ein System und ein Verfahren zum gleichzeitigen Befüllen von Behältern unterschiedlicher Formen und Größen. Eine Vielzahl von Fahrzeugen ist entlang eines

Schienensystems routingfähig, um die gleichzeitige Lieferung von ersten Behältern und zweiten Behältern an verschiedene Einheitenbetriebsstationen zu erleichtern. Die ersten und zweiten Behälter unterscheiden sich in der äußeren Form und im inneren Volumen voneinander.

Die DE 10 2014 214 697 A1 offenbart eine Vorrichtung zum Befüllen eines Behältnisses. Die Vorrichtung weist einen Planarantrieb auf. In einem Ausführungsbeispiel können mehrere Füllnadeln einer Vorfüllstation vorgesehen sein, unter die Mover die vorzufüllenden Behältnisse bringen. Die Füllnadeln sind hierzu in Reihe parallel zur Bewegungsrichtung angeordnet. Es können mehrere Vorfüllstellen vorgesehen werden. Der Mover kann so angesteuert werden, dass er eine freie Vorfüllstelle anfährt. Hierzu ist eine entsprechende Sensorik zur Auswertung der aktuellen Moverpositionen vorzusehen, die die Anwesenheit eines Movers an einer Vorfüllstelle erkennt und über eine übergeordnete Steuerung die jeweiligen Antriebsflächen so aktiviert, dass der Mover eine belegte Vorfüllstelle nicht ansteuert.

Der Erfindung liegt die Aufgabe zu Grunde, eine alternative und/oder verbesserte Behälterbehandlungsanlage zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Behälterbehandlungsanlage zur Behandlung (z. B. zum Herstellen, Reinigen, Prüfen, Abfüllen, Verschließen, Etikettieren, Bedrucken und/oder Verpacken) von Behältern (z. B. für flüssige Medien, vorzugsweise Getränke oder flüssige Nahrungsmittel). Die Behälterbehandlungsanlage weist mehrere Behandlungseinrichtungen zum Behandeln der Behälter auf. Die Behälterbehandlungsanlage weist ein Planarantriebssystem aufweisend ein Grundelement und mehrere Bewegungsvorrichtungen zum Transportieren der Behälter auf. Das Grundelement verbindet die mehreren Behandlungseinrichtungen miteinander. Die mehreren Bewegungsvorrichtungen sind bezüglich des Grundelements unabhängig voneinander bewegbar, vorzugsweise mittels magnetischer Wechselwirkung zwischen dem Grundelement und den mehreren Bewegungsvorrichtungen. Das Planarantriebssystem ist mittels einer Steuereinheit dazu konfiguriert, die mehreren Bewegungsvorrichtungen individuell nach jeweils einem von mehreren Behandlungsprofilen zur unterschiedlichen Behälterbehandlung zu einer Auswahl aus den mehreren Behandlungseinrichtungen zu bewegen, wobei die mehreren Behandlungsprofile jeweils eine unterschiedliche Auswahl aus den mehreren Behandlungseinrichtungen aufweisen.

Vorteilhaft ermöglicht die Behälterbehandlungsanlage eine flexible Behandlung unterschiedlicher Behälter (unterschiedliche Formate, Inhalte, Gestaltungen, Gebinde, Verpackungen usw.) ab Losgröße 1. Die Bewegungsvorrichtungen können die jeweils gehaltenen Behälter flexibel zu einer oder mehreren gewünschten Behandlungseinrichtungen bewegen. Durch feststehende Behandlungseinrichtung können große rotierende Massen (z. B. Füllerkarussell) entfallen, wenn gewünscht. Übergaben (in das "drehende Teil") entlang des gesamten Behältertransports können entfallen. Die Behälterbehandlungsanlage ist ohne starre Verbindungen zur Leistungssteigerung oder Flexibilisierung bei neuen Produkten hochflexibel und auch nachträgliche beim Kunden erweiterbar. Die Realisierung eines Zeitpuffers ist durch Abstellen des Behälters möglich, um die Anzahl an Bewegungsvorrichtungen gering zu halten. Behälter können zudem ausgeschleust werden, wenn Fehlfunktionen auftreten. Die Behälterbehandlungsanlage ist kompakt und weist eine platzsparende Bauweise auf. Verschiedenste Prozesse können auf engstem Raum miteinander kombiniert werden. Es werden keine raumgreifenden Pufferstrecken benötigt. Zusätzlich kann eine Leistungssteigerung beispielsweise durch Parallelisierung (z. B. Anordnung mehrerer gleicher Behandlungsvorrichtungen) und "chaotisches" Anfahren der gleichen Behandlungseinrichtungen, d.h. die gerade frei ist, erreicht werden. Die Dauer des längsten Prozesses bestimmt nicht mehr den gesamten Ablauf. Die Anlagenverfügbarkeit kann verbessert werden. Bei einer Störung oder Wartung an einer Behandlungseinrichtung kann beim Vorhandensein einer weiteren gleichen Behandlungseinrichtung diese angefahren werden und ggf. mit verminderter Leistung weiter produziert werden. Gleichzeitig kann die defekte Behandlungseinrichtung repariert oder gewartet werden.

Bevorzugt weisen die Bewegungsvorrichtungen jeweils eine Behälterhalterung (z. B. Sauggreifer, mechanischer Greifer oder eine Klemmhalterung) zum Halten mindestens eines Behälters auf.

In einem Ausführungsbeispiel weist die Auswahl der mehreren Behandlungsprofile jeweils mindestens zwei unterschiedliche Behandlungseinrichtungen der mehreren Behandlungseinrichtungen auf; und/oder die mehreren Behandlungsprofile weisen jeweils eine Reihenfolge (zum Anfahren) der ausgewählten Behandlungseinrichtungen auf.

In einem weiteren Ausführungsbeispiel weisen die mehreren Behandlungseinrichtungen mehrere, vorzugsweise unterschiedlich ausgebildete, Prüfeinrichtungen zum Prüfen der Behälter; mehrere, vorzugsweise unterschiedlich ausgebildete, Rinseinrichtungen zum Rinsen der Behälter; mehrere, vorzugsweise unterschiedlich ausgebildete und/oder mit unterschiedlichen Füllmedien versorgte, Fülleinrichtungen zum Befüllen der Behälter; mehrere, vorzugsweise unterschiedlich ausgebildete und/oder mit unterschiedlichen Etiketten bestückte, Etikettiereinrichtungen zum Etikettieren der Behälter; mehrere, vorzugsweise unterschiedlich ausgebildete, Druckeinrichtungen zum Bedrucken der Behälter; mehrere, vorzugsweise unterschiedlich ausgebildete und/oder mit unterschiedlichen Verschlüssen bestückte, Verschließeinrichtungen zum Verschließen der Behälter; mehrere, vorzugsweise unterschiedlich ausgebildete, Gruppiereinrichtungen zum Gruppieren der Behälter; mehrere, vorzugsweise unterschiedlich ausgebildete und/oder mit unterschiedlichen Verpackungen bestückte, Verpackungseinrichtungen zum Verpacken der Behälter; und/oder mehrere, vorzugsweise unterschiedlich ausgebildete, Behälterherstelleinrichtungen oder Behälterkonditionierungseinrichtungen zum Herstellen oder Konditionieren (z. B. Erwärmen oder Abkühlen) der Behälter auf.

Beispielsweise kann die unterschiedliche Auswahl der Behandlungsprofile dazu führen, dass unterschiedlich große und/oder unterschiedlich geformte Behälter behandelbar sind. Alternativ oder zusätzlich können die Behälter unterschiedlich herstellbar, konditionierbar, befüllbar, prüfbar, etikettierbar, bedruckbar, gruppierbar, verschließbar und/oder verpackbar sein.

Bevorzugt kann die Auswahl eines ersten Behandlungsprofils eine erste Behandlungseinrichtung der mehreren Behandlungseinrichtungen aufweisen, und die Auswahl eines zweiten Behandlungsprofils kann eine zweite Behandlungseinrichtung der mehreren Behandlungseinrichtungen aufweisen, wobei die erste Behandlungseinrichtung anders ausgeführt ist als die zweite Behandlungseinrichtung. Optional kann die Auswahl des ersten Behandlungsprofils eine dritte Behandlungseinrichtung der mehreren Behandlungseinrichtungen aufweisen, und die Auswahl des zweiten Behandlungsprofils kann die dritte und/oder eine vierte Behandlungseinrichtung der mehreren Behandlungseinrichtungen aufweisen. Die dritte und die vierte Behandlungseinrichtung können unterschiedlich ausgeführt sein.

Vorzugsweise kann die Auswahl eines ersten Behandlungsprofils eine erste Fülleinrichtung, die ein erstes Füllmedium zum Befüllen der Behälter bereitstellt, und die Auswahl eines zweiten Behandlungsprofils eine zweite Fülleinrichtung, die ein zweites Füllmedium zum Befüllen der Behälter bereitstellt, wobei sich das zweite Füllmedium von dem ersten Füllmedium unterscheidet, aufweisen.

Es ist möglich, dass die Behandlungsprofile in einer Steuereinheit des Planarantriebssystems gespeichert und zum Betreiben der Bewegungsvorrichtungen abrufbar sind. Beispielsweise können die Behandlungsprofile von einem Benutzer frei anlegbar sein.

In einem weiteren Ausführungsbeispiel ist das Planarantriebssystem als eine Linienschnittstelle zu den mehreren Behandlungseinrichtungen angeordnet, vorzugsweise mit dem Grundelement in einer (z. B. geradlinigen) Streifenform (z. B. mit bezüglich der beiden Längsseiten der Streifenform einseitig oder beidseitig angeordneten Behandlungseinrichtungen).

Beispielsweise können die mehreren Behandlungseinrichtungen zumindest teilweise eine Fördereinrichtung, die zum Übernehmen von Behältern von den mehreren Bewegungsvorrichtungen mit dem Planarantriebssystem verbunden ist, aufweisen. Alternativ oder zusätzlich können die mehreren Behandlungseinrichtungen zumindest teilweise dazu angeordnet sein, einen Behälter zu behandeln, während der Behälter von einer jeweiligen Bewegungsvorrichtung gehalten ist.

In einer Ausführungsform weisen die mehreren Behandlungseinrichtungen eine Rinseinrichtung zum Rinsen von Behältern auf, und die mehreren Bewegungsvorrichtungen sind in einem Abschnitt stromabwärts der Rinseinrichtung über Kopf an dem Grundelement zum Ausleeren der Behälter bewegbar (z. B. an einer Unterseite des Grundelements).

In einer weiteren Ausführungsform ist das Grundelement horizontal ausgerichtet. Vorzugsweise können die mehreren Behandlungseinrichtungen (z. B. zumindest teilweise ausgeführt als Fülleinrichtungen) zumindest teilweise direkt oberhalb des Grundelements in mehreren Reihen und mehreren Spalten, vorzugsweise in einem Schachbrettmuster, angeordnet, vorzugsweise aufgehängt, sein. Dies kann eine sehr kompakte Bauweise ermöglichen.

In einer weiteren Ausführungsform weist die Behälterbehandlungsanlage ferner mindestens ein weiteres Planarantriebssystem aufweisend ein weiteres Grundelement und mehrere weitere Bewegungsvorrichtungen, die die mehreren Behandlungseinrichtungen transportieren, auf. Die mehreren weiteren Bewegungsvorrichtungen sind bezüglich des weiteren Grundelements unabhängig voneinander bewegbar, vorzugsweise mittels magnetischer Wechselwirkung zwischen dem weiteren Grundelement und den mehreren weiteren Bewegungsvorrichtungen. Damit können auch die Behandlungseinrichtungen flexibel bewegbar sein.

In einer Weiterbildung sind die Behälter mittels der mehreren Bewegungsvorrichtungen und die mehreren Behandlungseinrichtungen mittels der mehreren weiteren Bewegungsvorrichtungen während der jeweiligen Behälterbehandlung gemeinsam bewegbar.

In einer Weiterbildung sind das Grundelement und das weitere Grundelement geneigt, vorzugsweise senkrecht, zueinander ausgerichtet, wobei vorzugsweise das Grundelement horizontal ausgerichtet ist.

In einer Ausführungsvariante weist das Grundelement mehrere vertikal voneinander beabstandete Ebenen auf. Vorzugsweise sind die mehreren Behandlungseinrichtungen zumindest teilweise auf oder an unterschiedlichen Ebenen der mehreren vertikal voneinander beabstandeten Ebenen angeordnet. Bevorzugt weist die Behälterbehandlungsanlage ferner mindestens eine Aufzugseinrichtung für die mehreren Bewegungsvorrichtungen auf, wobei die mindestens eine Aufzugseinrichtung die mehreren vertikal voneinander beabstandeten Ebenen des Grundelements miteinander verbindet. Damit kann ein dreidimensionaler Bewegungsraum für die Bewegungsvorrichtungen geschaffen werden. Dies ermöglicht eine sehr kompakte Bauweise mit einer geringen Anlagenstellfläche.

Beispielsweise kann die Aufzugseinrichtung als ein bewegbarer Abschnitt des Grundelements oder als eine Einrichtung separat zum Grundelement ausgeführt sein.

In einem Ausführungsbeispiel weist die Behälterbehandlungsanlage ferner mehrere Ausleitsysteme (z. B. Ausleitförderer) auf, die an unterschiedlichen Positionen mit dem Planarantriebssystem verbunden sind. Die mehreren Behandlungseinrichtungen weisen mehrere unterschiedlich ausgebildete Prüfeinrichtungen zum Prüfen unterschiedlicher Merkmale der Behälter auf. Das Planarantriebssystem ist mittels der Steuereinheit dazu konfiguriert, in Abhängigkeit von einer mittels einer der mehreren Prüfeinrichtungen ermittelten Beanstandung den jeweils beanstandeten Behälter mittels einer der Bewegungsvorrichtungen zu einem der ermittelten Beanstandung zugeordnetem Ausleitsystem der mehreren Ausleitsysteme zu bewegen. Damit kann auf einfache Weise eine klassifizierte Ausleitung fehlerhafter Behälter erfolgen.

In einem weiteren Ausführungsbeispiel weisen die mehreren Bewegungsvorrichtungen jeweils eine Aufstandsfläche für die Behälter auf, die durch mehrere (z. B. parallel beabstandete) Stege gebildet ist.

In einer Weiterbildung weist die Behälterbehandlungsanlage ferner einen Einlaufförderer mit einem kammförmigen Auslaufbereich auf. Das Planarantriebssystem ist mittels der Steuereinheit dazu konfiguriert, dass die mehreren Bewegungsvorrichtungen zur Behälterübernahme eine Hubbewegung (z. B. nach oben) relativ zum Grundelement beim kammförmigen Auslaufbereich durchführen, sodass die mehreren Stege durch den kammförmigen Auslaufbereich hindurchtreten. Alternativ oder zusätzlich weist die Behälterbehandlungsanlage ferner einen Auslaufförderer mit einem kammförmigen Einlaufbereich auf. Das Planarantriebssystem ist mittels der Steuereinheit dazu konfiguriert, dass die mehreren Bewegungsvorrichtungen zur Behälterübergabe eine Hubbewegung (z. B. nach unten) relativ zum Grundelement beim kammförmigen Einlaufbereich durchführen, sodass die mehreren Stege aus dem kammförmigen Einlaufbereich austreten.

In einer Ausführungsform weist die Behälterbehandlungsanlage ferner einen Einlaufförderer mit einem Auslaufbereich aufweisend eine angeschrägte Unterseite auf. Das Planarantriebssystem ist mittels der Steuereinheit dazu konfiguriert, die mehreren Bewegungsvorrichtungen zur Behälterübernahme geneigt und mittels einer Hubbewegung (z. B. nach oben) relativ zum Grundelement entlang der angeschrägten Unterseite des Auslaufbereichs zu bewegen und direkt stromabwärts des Auslaufbereichs zur Behälterübernahme vom Auslaufbereich aufzutauchen.

In einer weiteren Ausführungsform weist die Behälterbehandlungsanlage ferner einen Einlaufförderer mit einem Auslaufbereich und einer Überschubeinrichtung (z. B. Führungsgeländer, Förderband usw.), die sich quer über den Auslaufbereich erstreckt, auf. Das Planarantriebssystem ist vorzugsweise mittels der Steuereinheit dazu konfiguriert, die mehreren Bewegungsvorrichtungen zur Behälterübernahme seitlich neben dem Auslaufbereich zu bewegen und die mittels der Überschubeinrichtung runter von dem Auslaufbereich geschobenen Behälter zu empfangen. Alternativ und/oder zusätzlich weist die Behälterbehandlungsanlage ferner einen Auslaufförderer mit einem Einlaufbereich und einer Überschubeinrichtung (z. B. Führungsgeländer, Förderband usw.), die sich über dem Grundelement und seitlich von dem Einlaufbereich erstreckt, auf. Das Planarantriebssystem ist vorzugweise mittels der Steuereinheit dazu konfiguriert, die mehreren Bewegungsvorrichtungen zur Behälterübergabe seitlich neben dem Einlaufbereich zu bewegen und die Behälter mittels der Überschubeinrichtung an den Einlaufbereich zu übergeben.

In einer Ausführungsvariante ist das Planarantriebssystem mittels der Steuereinheit dazu konfiguriert, dass sich die mehreren Bewegungsvorrichtungen auf eine Geschwindigkeit der zu übernehmenden Behälter auf dem Auslaufbereich bei der Behälterübernahme aufsynchronisieren. Dies ermöglicht eine kontinuierliche Behälterübergabe ohne Abbremsen der Behälter. Somit kann das Risiko des Überschwappens oder Umkippens der Behälter deutlich verringert und ein Durchsatz erhöht werden.

In einer weiteren Ausführungsvariante ist das Planarantriebssystem mittels der Steuereinheit dazu konfiguriert, die mehreren Bewegungsvorrichtungen bei einer (z. B. positiven oder negativen) Beschleunigung und/oder bei einer Kurvenfahrt relativ zu dem Grundelement zu neigen, vorzugweise in einem Maße zum Verhindern eines Überschwappens und/oder Umkippens der transportierten Behälter.

In einer weiteren Ausführungsvariante ist das Planarantriebssystem mittels der Steuereinheit dazu konfiguriert, einen Bewegungspfad der mehreren Bewegungsvorrichtungen derart anzupassen, dass eine Querbeschleunigung auf die transportierten Behälter unter einen vorbestimmten Grenzwert verringert wird, vorzugweise zum Verhindern eines Überschwappens und/oder Umkippens der transportierten Behälter.

In einer weiteren Ausführungsvariante ist das Planarantriebssystem mittels der Steuereinheit dazu konfiguriert, eine Teilung der transportierten Behälter an eine Teilung einer Ziel-Behandlungseinrichtung der mehreren Behandlungseinrichtungen mittels der Bewegungsvorrichtungen anzupassen.

In einem weiteren Ausführungsbeispiel weisen die mehreren Bewegungsvorrichtungen jeweils eine Aufstandsfläche für die Behälter, die durch mehrere (z. B. parallele) Stege gebildet ist, und optional eine Behälterhalterung (z. B. eine aktive oder passive Behälterhalsklammer), vorzugsweise Behälterhalshalterung, auf. Vorzugsweise können die Behälter zwischen der Aufstandsfläche und der Behälterhalterung der jeweiligen Bewegungsvorrichtung einspannbar sein (z. B. zwischen Behälterboden und Behälterhalsring).

In einem weiteren Ausführungsbeispiel weist mindestens eine Behandlungseinrichtung mehrere Behandlungsstationen auf, die jeweils eine durch mehrere (z. B. parallele) Stege gebildete Aufstandsfläche für die Behälter aufweisen. Vorzugsweise kann das Planarantriebssystem mittels der Steuereinheit dazu konfiguriert sein, dass die mehreren Bewegungsvorrichtungen zur Behälterübernahme und/oder zur Behälterübergabe eine Hubbewegung und/oder eine Neigebewegung relativ zum Grundelement bei der Aufstandsfläche der jeweiligen Behandlungsstation durchführen, sodass die Aufstandsfläche der jeweiligen Bewegungsvorrichtung durch die Aufstandsfläche der jeweiligen Behandlungsstation hindurchtritt und/oder die Aufstandsfläche der jeweiligen Bewegungsvorrichtung und die Aufstandsfläche der jeweiligen Behandlungsstation miteinander kämmen. In anderen Worten können sich die Aufstandsflächen einer Transport-Bewegungsvorrichtung und die einer Behandlungsstation zeitweise und teilweise bzw. bereichsweise überlappen bzw. ineinandergreifen, vorzugsweise ohne sich zu berühren. Dabei sind beide Aufstandsflächen vorzugsweise im Wesentlichen in derselben Ebene angeordnet.

Während des Überlappens bzw. Kämmens ist bevorzugt zumindest ein Steg der Aufstandsfläche der Transport-Bewegungsvorrichtung in Transportrichtung gesehen zumindest teilweise bzw. bereichsweise vor oder hinter einem Steg der Aufstandsfläche der Behandlungsstation angeordnet.

In anderen Worten kann ein Steg der einen Aufstandsfläche in Transportrichtung der Behälter einen Steg der anderen Aufstandsfläche verdecken.

Ein Steg weist vorzugsweise eine Breite von weniger als zwei Drittel, vorzugsweise weniger als die Hälfte, noch bevorzugter weniger als ein Drittel eines Durchmessers (der Aufstandsfläche) eines zu transportierenden Behälters auf.

Ein Steg bzw. die Aufstandsfläche und optional die Halterung können zumindest bereichsweise bzw. teilweise auskragend an der Transport-Bewegungsvorrichtung angeordnet sein.

Insbesondere kann der Steg bzw. die Aufstandsfläche für eine Behälteraufnahme oder -abgabe das Grundelement des Planarantriebssystems zumindest zeitweise und bereichsweise bzw. teilweise verlassen. Verlassen heißt, dass dieser bzw. diese zumindest bereichsweise bzw. teilweise nicht mehr in vertikaler Richtung über dem Grundelement angeordnet ist.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar und unabhängig voneinander offenbart, insbesondere unabhängig vom Vorhandensein der Behandlungsprofile.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf eine Behälterbehandlungsanlage;
- Figur 2: eine schematische Seitenansicht einer Behälterbehandlungsanlage;
- Figur 3: eine schematische Draufsicht auf eine Behälterbehandlungsanlage;
- Figur 4: eine schematische Draufsicht auf eine Behälterbehandlungsanlage;
- Figur 5: eine schematische Seitenansicht mehrerer nacheinander ausgeführter Prozessschritte in einer Behälterbehandlungsanlage;
- Figur 6: eine schematische Seitenansicht mehrerer nacheinander ausgeführter Prozessschritte in einer Behälterbehandlungsanlage;
- Figur 7: eine schematische Draufsicht auf eine Behälterbehandlungsanlage;
- Figur 8: eine schematische Draufsicht auf eine Behälterbehandlungsanlage;
- Figur 9A: eine schematische Draufsicht auf eine Behälterbehandlungsanlage;
- Figur 9B: eine schematische Schnittansicht durch die Behälterbehandlungsanlage von Figur 9A;
- Figur 10: eine schematische Draufsicht auf eine Behälterbehandlungsanlage;
- Figur 11: eine schematische Draufsicht auf eine Behälterbehandlungsanlage;
- Figur 12A: eine schematische Draufsicht auf eine Behälterbehandlungsanlage;
- Figur 12B: eine perspektivische Ansicht eines Abschnitts aus der Behälterbehandlungsanlage von Figur 12A;
- Figur 13A: eine Seitenansicht einer Behälterbehandlungsanlage;
- Figur 13B: eine Draufsicht auf die Behälterbehandlungsanlage von Figur 13A;
- Figur 14A: eine Seitenansicht auf einen Behälterübernahmebereich einer Behälterbehandlungsanlage in drei aufeinanderfolgenden Prozessschritten;
- Figur 14B: eine Draufsicht auf die drei Prozessschritte der Behälterbehandlungsanlage von Figur 14A;
- Figur 15A: eine Seitenansicht einer Behälterbehandlungsanlage;
- Figur 15B: eine Draufsicht auf die Behälterbehandlungsanlage von Figur 15A;
- Figur 16: eine Draufsicht auf einen Abschnitt einer Behälterbehandlungsanlage;
- Figur 17A: eine perspektivische Ansicht einer Behälterbehandlungsanlage;
- Figur 17B: eine Draufsicht auf die Behälterbehandlungsanlage von Figur 17B;
- Figur 18: eine Draufsicht auf einen Abschnitt einer Behälterbehandlungsanlage;
- Figuren 19A - 19C: Seitenansichten auf einen Abschnitt einer Behälterbehandlungsanlage in drei aufeinanderfolgenden Prozessschritten bei einer Behälterübernahme;
- Figur 20: eine Draufsicht auf eine Behälterbehandlungsanlage;
- Figur 21: eine Draufsicht auf eine Behälterbehandlungsanlage; und
- Figur 22: eine Draufsicht auf eine Behälterbehandlungsanlage.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

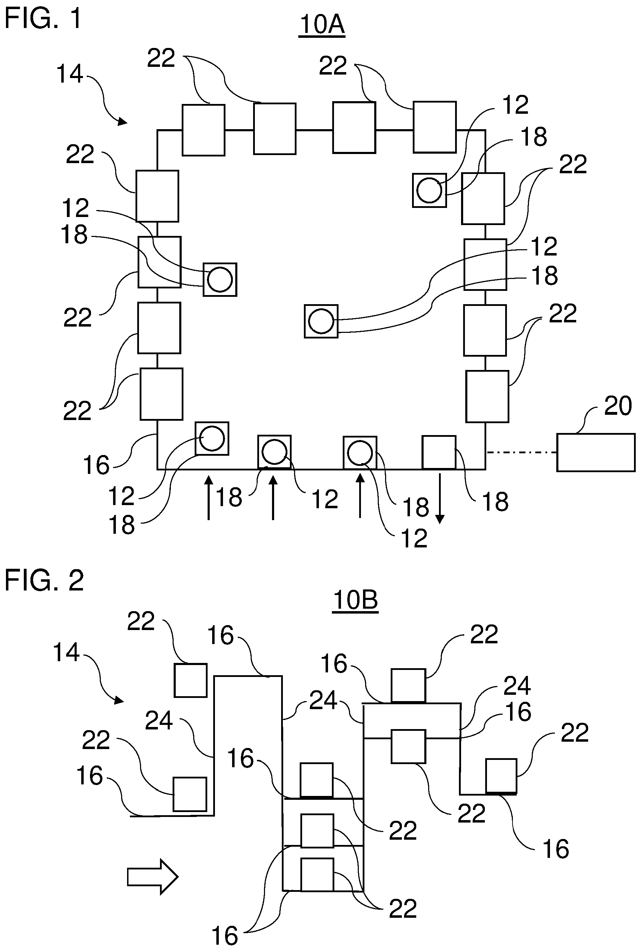

Figur 1 zeigt eine Behälterbehandlungsanlage 10A zum Behandeln von Behältern 12. Die Behälter 12 können beispielsweise als Flaschen, Dosen, Kanister usw. ausgeführt sein. Die Behälter 12 können beispielsweise eine runde (z. B. kreisrunde oder elliptische) oder eckige Grundform aufweisen. Die Behälter 12 werden bevorzugt zum Aufnehmen von flüssigen, pastösen oder festen Nahrungsmitteln verwendet.

Die Behälterbehandlungsanlage 10A weist ein Planarantriebssystem 14 auf. Das Planarantriebssystem 14 ist vorzugsweise ein magnetisches Planarantriebssystem.

Das Planarantriebssystem 14 weist ein Grundelement 16, mehrere Bewegungsvorrichtungen 18 (Mover bzw. Läufer) und eine Steuereinheit 20 (nur in Figur 1 gesondert dargestellt) auf. Die Bewegungsvorrichtungen 18 können mittels magnetischer Wechselwirkung mit dem Grundelement 16 frei und unabhängig voneinander über das Grundelement 16 bewegt werden. Die Steuereinheit 20 ist dazu ausgebildet, eine Bewegung der Bewegungsvorrichtungen 18 bezüglich des Grundelements 16 zu steuern. Auch wenn dies nachfolgend nicht explizit erwähnt oder dargestellt ist, weisen alle hierin beschriebenen Planarantriebssysteme 14 eine entsprechende Steuereinheit 20 auf.

Die Bewegungsvorrichtungen 18 können auch mittels magnetischer Wechselwirkung mit dem Grundelement 16 bezüglich des Grundelements 16 gedreht werden (z. B. Gieren). Die Bewegungsvorrichtungen 18 können auch mittels magnetischer Wechselwirkung mit dem Grundelement 16 bezüglich des Grundelements 16 geneigt werden (z. B. Nicken und/oder Rollen). Die Bewegungsvorrichtungen 18 können ebenfalls mittels magnetischer Wechselwirkung mit dem Grundelement 16 bezüglich des Grundelements 16 eine Hubbewegung nach oben oder nach unten ausführen. Eine Anzahl der Bewegungsvorrichtungen 18 kann je nach Anwendungsfall frei wählbar sein.

Das Grundelement 16 bildet einen Stator des Planarantriebssystems 14. Die Bewegungsvorrichtungen 18 bilden Läufer des Planarantriebssystems 14. Die Bewegungsvorrichtungen 18 werden berührungslos von dem Grundelement 16 getragen, vorzugsweise auf einer Oberseite des Grundelements 16. Das Grundelement 16 kann beispielsweise mehrere, verteilt angeordnete Elektromagnete, z. B. elektrische Spulen, aufweisen. Die Bewegungsvorrichtungen 18 können Permanentmagnete aufweisen. Die Elektromagnete sind bevorzugt in einer Matrix angeordnet, welche sich in einer Ebene des Grundelements 16 erstreckt (hier bevorzugt Horizontalebene). Die Steuereinheit 20 des Planarantriebssystems 14 kann eine Stromzuführung zu den Elektromagneten des Grundelements 16 steuern, um elektromagnetische Felder an einer gewünschten Position des Grundelements 16 mit einer gewünschten Feldstärke aufzubauen. Ein Vortrieb, eine Drehung, eine Neigung und/oder ein Hub der Bewegungsvorrichtungen 18 kann durch entsprechende elektromagnetische Felder der Elektromagneten des Grundelements 16 bewirkt werden. Bevorzugt ist das Grundelement 16 in einer Horizontalebene ausgerichtet. Allerdings sind auch andere Ausrichtungen denkbar, z. B. eine zur Horizontalebene geneigte Ausrichtung, vorzugsweise eine Vertikalausrichtung.

Das Grundelement 16 kann verschiedene Ausprägungen und Formen haben, z. B. streifenförmig, rechteckig, quadratisch, vieleckig, rund, kreisrund usw. Das Grundelement 16 kann in einer Ebene, vorzugsweise Horizontalebene, angeordnet sein. Es ist allerdings auch möglich, dass das Grundelement 16 in mehreren Ebenen angeordnet ist (vgl. Ausführungsbeispiel von Figur 2). Für Reinraumanwendungen kann das Grundelement 16 innerhalb eines Reinraumes angeordnet sein oder eine, z. B. untere, Begrenzungswand des Reinraums bilden. Für Reinraumanwendungen kann beim Planarantriebssystem 14 zudem auf eine Abdichtung wie bei mechanischen Transportsystemen zum Reinraum hin verzichtet werden, z. B. in Form von Wasserschlössern in herkömmlichen Anwendungen.

Die Bewegungsvorrichtungen 18 sind dazu ausgebildet, die Behälter 12 zu bewegen, wenn sich die jeweilige Bewegungsvorrichtung 18 relativ zum Grundelement 16 bewegt. Dafür können die Bewegungsvorrichtungen 18 bspw. jeweils eine Behälterhalterung aufweisen, mit der mindestens ein Behälter 12 gehalten werden kann. Die Behälterhalterung kann beispielsweise als ein Sauggreifer, ein mechanischer Greifer, eine Klemmhalterungen usw. ausgeführt sein. Es ist möglich, dass mehrere Bewegungsvorrichtungen 18 zusammenwirken, um einen Behälter 12 zu transportieren. Es ist auch möglich, dass eine Bewegungsvorrichtung 18 gleichzeitig mehrere Behälter 12, z. B. in Form eines Gebindes, transportieren kann.

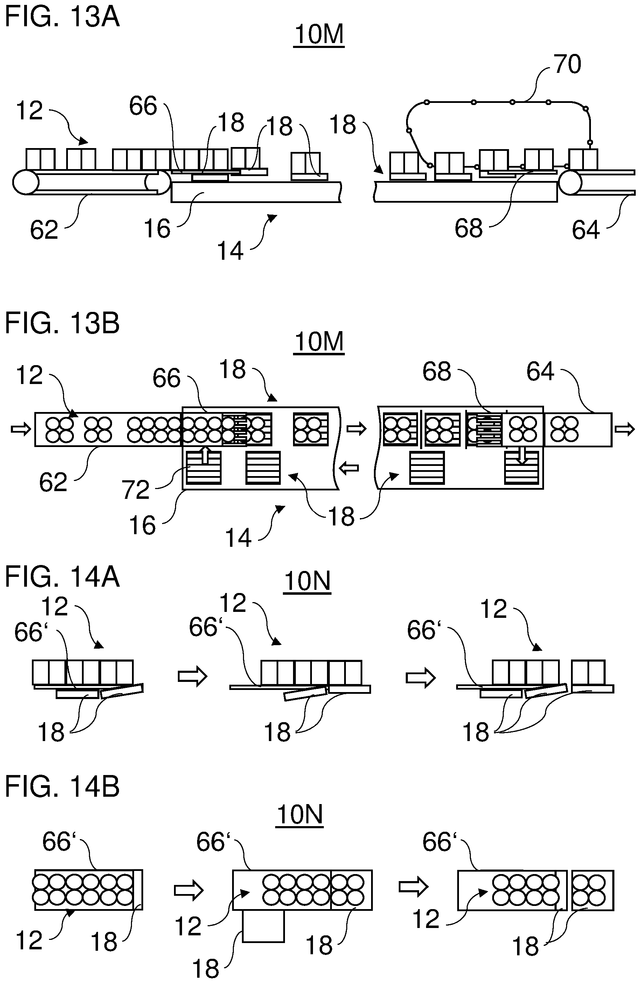

Die Behälter 12 können durch einen oder mehrere Zulaufförderer (zum Beispiel Bandförderer) zu dem Grundelement 16 bzw. die Bewegungsvorrichtungen 18 transportiert werden. Es ist möglich, dass ein oder mehrere Abfuhrförderer (zum Beispiel Bandförderer) angeordnet sind, um die behandelten Behälter 12 von den Bewegungsvorrichtungen 18 zu übernehmen und abzutransportieren. Beispielhafte Varianten zur Behälterübergabe und Behälterübernahme sind beispielsweise unter Bezugnahme auf die Figuren 13A bis 15B hierin beschrieben.

Die Behälterbehandlungsanlage 10A weist mehrere Behandlungseinrichtungen 22 auf. Beispielsweise können die Behandlungseinrichtungen 22 nahe dem oder angrenzend an das Grundelement 16 angeordnet sein, sodass sie von den Bewegungsvorrichtungen 18 mit den transportierten Behältern 12 erreicht werden können. Die Behandlungseinrichtungen 22 können beispielsweise am Rand oder auch innerhalb des Grundelements 16 fest angeordnet sein. Es ist auch möglich, dass die Behandlungseinrichtungen 22 von eigenen Bewegungsvorrichtungen getragen und bezüglich des Grundelements 16 bewegbar sind (nicht in Figur 1 dargestellt). Die Behandlungseinrichtungen 22 können einen jeweiligen Behälter 12 behandeln, während der Behälter 12 von einer jeweiligen Bewegungsvorrichtung 18 gehalten ist. Die Behandlungseinrichtungen 22 können zumindest teilweise unterschiedlich ausgeführt sein.

Die Behandlungseinrichtungen 22 können beispielsweise mindestens eine Prüfeinrichtung bzw. Inspektionseinrichtung zum Prüfen/Inspizieren der Behälter 12 aufweisen, z. B. auf Beschädigungen und/oder Verunreinigungen. Die Prüfeinrichtungen können beispielsweise eine optische Sensorik aufweisen (z. B. Kamera, Laserscanner, LED-Scanner). Bei mehreren Prüfeinrichtungen können diese vorzugweise zumindest teilweise unterschiedlich ausgebildet sein.

Alternativ oder zusätzlich können die Behandlungseinrichtungen 22 beispielsweise mindestens eine Rinseinrichtung zum Rinsen bzw. Reinigen der Behälter 12 aufweisen, z. B. mit Wasser oder aseptischem Fluid.

Alternativ oder zusätzlich können die Behandlungseinrichtungen 22 beispielsweise mindestens eine Fülleinrichtung zum Befüllen der Behälter 12 aufweisen, z. B. mit flüssigen oder pastösen Nahrungsmitteln. Bei mehreren Fülleinrichtungen können diese vorzugweise zumindest teilweise unterschiedlich ausgebildet sein und/oder mit unterschiedlichen Füllmedien versorgt werden. Es können beispielsweise unterschiedliche Fülleinrichtungen für verschiedene Aromastoffe und/oder Füllprodukte, z. B. auch mit Fruchtstücken umfasst sein. Es ist auch möglich, dass ein Befüllen nach einem Verschließen des jeweiligen Behälters 12 erfolgt, z. B. mittels sogenannter Impresseal-Technik, bei der durch den Verschluss des Behälters 12 hindurch in den Behälter 12 hinein injiziert und anschließend verschweißt wird.

Alternativ oder zusätzlich können die Behandlungseinrichtungen 22 mindestens eine Etikettiereinrichtung zum Etikettieren der Behälter 12 aufweisen. Bei mehreren Etikettiereinrichtungen können diese vorzugweise zumindest teilweise unterschiedlich ausgebildet sein und/oder mit unterschiedlichen Etiketten bestückt sein.

Alternativ oder zusätzlich können die Behandlungseinrichtungen 22 mindestens eine Druckeinrichtung zum Bedrucken der Behälter 12 aufweisen. Bei mehreren Druckeinrichtungen können diese vorzugweise zumindest teilweise unterschiedlich ausgebildet sein.

Alternativ oder zusätzlich können die Behandlungseinrichtungen 22 mindestens eine Verschließeinrichtung zum Verschließen der Behälter 12 aufweisen. Bei mehreren Verschließeinrichtungen können diese vorzugweise zumindest teilweise unterschiedlich ausgebildet und/oder mit unterschiedlichen Verschlüssen bestückt sein.

Alternativ oder zusätzlich können die Behandlungseinrichtungen 22 mindestens eine Gruppiereinrichtung zum Gruppieren der Behälter 12 aufweisen. Bei mehreren Gruppiereinrichtungen können diese vorzugweise zumindest teilweise unterschiedlich ausgebildet sein.

Alternativ oder zusätzlich können die Behandlungseinrichtungen 22 mindestens eine Verpackungseinrichtung zum Verpacken der Behälter 12 aufweisen. Bei mehreren Verpackungseinrichtungen können diese vorzugweise zumindest teilweise unterschiedlich ausgebildet und/oder mit unterschiedlichen Verpackungen bestückt sein.

Alternativ oder zusätzlich können die Behandlungseinrichtungen 22 mindestens eine Behälterherstelleinrichtung oder Behälterkonditionierungseinrichtung zum Herstellen oder Konditionieren der Behälter 12 aufweisen, z. B. PET-Blasmaschinen, Behälterwärmer usw. Bei mehreren Behälterherstelleinrichtungen oder Behälterkonditionierungseinrichtungen können zumindest teilweise unterschiedlich ausgebildet sein.

Die Behandlungseinrichtungen 22 können gruppiert angeordnet sein. Beispielsweise können an einer Außenseite (zum Beispiel linke Außenseite in Figur 1) des Grundelements 16 die mehreren Etikettiereinrichtungen angeordnet sein. An einer anderen Außenseite (zum Beispiel obere Außenseite in Figur 1) des Grundelements 16 können die mehreren Fülleinrichtungen angeordnet sein. An einer anderen Außenseite (zum Beispiel rechte Außenseite in Figur 1) des Grundelements 16 können die mehreren Verschließeinrichtungen angeordnet sein.

Eine Besonderheit der Behälterbehandlungsanlage 10A besteht darin, dass sie zur Behandlung unterschiedlicher Behälter (unterschiedliche Formate, Inhalte, Gestaltungen, Gebinde, Verpackungen usw.) ab Losgröße 1 flexibel verwendbar ist. Die Bewegungsvorrichtungen 18 können die jeweils gehaltenen Behälter 12 flexibel zu einer oder mehreren gewünschten Behandlungseinrichtungen 22 bewegen. Diese Besonderheit kann ebenfalls von allen anderen hierin beschriebenen Behälterbehandlungsanlagen genutzt werden.

Beispielsweise kann eine erste Bewegungsvorrichtung 18 einen ersten Behälter 12 zu einer ersten Fülleinrichtung zum Befüllen mit einem ersten Füllmedium, zu einer ersten Etikettiereinrichtung zum Etikettieren mit einem ersten Etikett oder ersten Druckeinrichtung zum Bedrucken mit einem ersten Aufdruck und zu einer ersten Verschließeinrichtung zum Verschließen mit einem ersten Verschluss bewegen. Eine zweite Bewegungsvorrichtung 18 kann einen zweiten Behälter 12 zu einer zweiten Fülleinrichtung zum Befüllen mit einem Füllmedium, zu einer zweiten Etikettiereinrichtung zum Etikettieren mit einem zweiten Etikett oder zweiten Druckeinrichtung zum Bedrucken mit einem zweiten Aufdruck und zu einer zweiten Verschließeinrichtung zum Verschließen mit einem zweiten Verschluss bewegen. Das erste Füllmedium kann sich vom zweiten Füllmedium unterscheiden. Das erste Etikett kann sich vom zweiten Etikett unterscheiden. Der erste Aufdruck an sich vom zweiten Aufdruck unterscheiden. Der erste Verschluss kann sich vom zweiten Verschluss unterscheiden. Es ist auch möglich, dass die erste Bewegungsvorrichtung 18 und/oder die zweite Bewegungsvorrichtung 18 den Behälter 12 zu jeweils mehr oder weniger Behandlungseinrichtungen 22 bewegt.

Für unterschiedliche gewünschte Behälterbehandlungen können unterschiedliche Behandlungsprofile vorgesehen sein. Die Behandlungsprofile können in der Steuereinheit 20 gespeichert and anpassbar sein. Jedes Behandlungsprofil weist eine unterschiedliche Auswahl aus den mehreren Behandlungseinrichtungen 22 auf, zu denen der jeweilige Behälter 12 mittels einer der Bewegungsvorrichtungen 18 bewegt werden soll. Die jeweilige Auswahl kann lediglich eine oder auch mehrere Behandlungseinrichtungen 22 aufweisen. Die Behandlungsprofile können bspw. jeweils die Zielkoordinaten der ausgewählten Behandlungseinrichtungen 22 aufweisen. Die jeweiligen Bewegungspfade zu den ausgewählten Behandlungseinrichtungen 22 können von der Steuereinheit 20 bspw. in Echtzeit ermittelt werden oder ebenfalls in den Behandlungsprofilen umfasst sein.

Eine Zuordnung eines Behälters 12 zu einem Behandlungsprofil kann beispielsweise mittels eines RFID-Chips des Behälters 12, mittels eines erfassbaren Codes des Behälters 12 und/oder mittels einer sensorischen und/oder steuerungstechnischen Nachverfolgung des Behälter 12 auf der Behälterbehandlungsanlage 10A erfolgen.

Die nachfolgenden Figuren zeigen Ausführungsbeispiele für Behälterbehandlungsanlagen, die Planarantriebssysteme aufweisen, die gemäß den erwähnten Behandlungsprofilen betreibbar sind. Es wird allerdings darauf hingewiesen, dass die unter Bezugnahme auf die nachfolgenden Figuren beschrieben Ausführungsbeispiele auch unabhängig von einer Planarantriebskonfiguration, die unterschiedliche Behandlungsprofilen nutzt, offenbart sind.

Die Figur 2 zeigt eine Behälterbehandlungsanlage 10B.

Eine Besonderheit der Behälterbehandlungsanlage 10B besteht im dreidimensionalen Bewegungsraum. Das Grundelement 16 des Planarantriebssystems 14 ist in mehreren vertikal beabstandeten Ebenen angeordnet. Ebenso können die Behandlungseinrichtungen 22 in unterschiedlichen Höhen an einer jeweiligen Ebene des Grundelements 16 angeordnet sein. Ein Transfer der Bewegungsvorrichtungen 18 (nicht dargestellt in Figur 2) zwischen den Ebenen des Grundelements 16 kann beispielsweise mit einer Aufzugseinrichtung 24 erfolgen. Die Aufzugseinrichtung 24 kann separat zu dem Grundelement 16 vorgesehen sein, wie dargestellt ist. Es ist ebenfalls möglich, dass die Aufzugseinrichtung 24 durch einen vertikal bewegbaren Abschnitt des Grundelements 16 gebildet ist. Die Aufzugseinrichtung 24 kann die Bewegungsvorrichtungen 18 zu den unterschiedlichen Ebenen des Grundelements 16 bewegen.

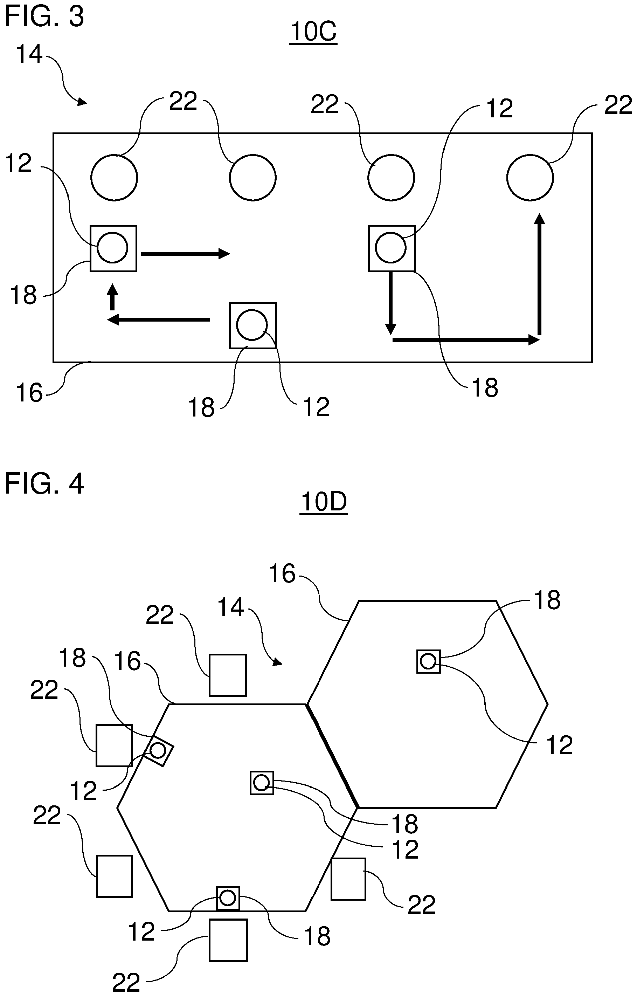

Die Figur 3 zeigt eine Behälterbehandlungsanlage 10C.

Die Behälterbehandlungsanlage 10C weist mehrere beispielhaft als Fülleinrichtungen ausgeführte Behandlungseinrichtungen 22 auf. Die Bewegungsvorrichtungen 18 können die getragenen Behälter 12 jeweils zu unterschiedliche Fülleinrichtungen bewegen. Die Behälter 12 können somit unterschiedlich gefüllt werden. Es ist möglich, dass die Behälter 12 jeweils nacheinander zu mehreren Fülleinrichtungen bewegt werden oder lediglich zu einer Fülleinrichtung bewegt werden.

Die Figur 4 zeigt eine Behälterbehandlungsanlage 10D.

Die Behälterbehandlungsanlage 10D weist ein Planarantriebssystem 14 mit zwei Grundelementen 16 auf. Die Bewegungsvorrichtungen 18 können bspw. auf beiden Grundelementen 16 bewegt werden, oder für jedes der Grundelemente 16 sind eigene Bewegungsvorrichtungen 18 vorgesehen.

Die beiden Grundelemente 16 können verschiedenen Anlagenteilen der Behälterbehandlungsanlage 10D zugeordnet sein. Innerhalb eines Anlagenteils, d.h. im Bereich eines der Grundelemente 16, können beispielsweise alle erforderlichen Behandlungseinrichtungen 22 angeordnet sein, die ein vollständige Behälterbehandlung bis hin zum verkaufsfertigen Produkt ermöglichen. Es ist auch möglich, dass je Anlagenteil, d.h. je Grundelement 16, nur ein Behandlungsschritt (z. B. Prüfen, Füllen oder Ausstatten) in unterschiedlichen Varianten an den unterschiedlichen Behandlungseinrichtungen 22, die vom jeweiligen Grundelement 16 erreichbar sind, ausführbar ist. Die Behälter 12 werden für den nächsten Behandlungsschritt dann zum nächsten Grundelement 16 mittels der Bewegungsvorrichtungen 18 bewegt. Es sind auch Kombinationen aus den beiden vorgenannten Ausführungen möglich, z. B. als eine Interkombination verschiedener (nicht vollständiger) Prozessschritte im Sinne der Behandlung hin zu einem verkaufsfertigen Produkt.

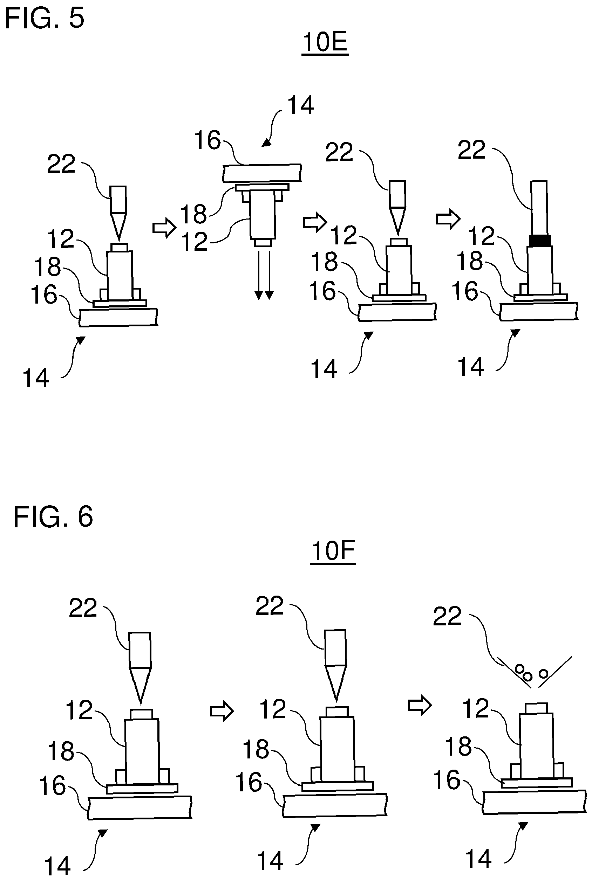

Die Figur 5 zeigt unterschiedliche Behandlungsstationen einer Behälterbehandlungsanlage 10E, die gemäß einem beispielhaften Behandlungsprofil angefahren werden können.

Zunächst wird der Behälter 12, der auf der Bewegungsvorrichtung 18 gehalten ist, mittels einer als Rinseinrichtung ausgeführten Behälterbehandlungseinrichtung 22 gerinst bzw. ausgespült. Die Spülflüssigkeit kann aseptisch sein. Nachfolgend verläuft das Grundelement 16 (z. B. nach einer 180° Wende oder einer Aufzugseinrichtung) derart, dass die Bewegungsvorrichtung 18 über Kopf positioniert werden kann. Die Spülflüssigkeit kann aus dem somit ebenfalls über Kopf gehaltenen Behälter 12 auslaufen. Nachfolgend verläuft das Grundelement 16 wieder derart, dass die Bewegungsvorrichtung 18 und damit der Behälter 12 aufrecht positioniert werden kann. Die Bewegungsvorrichtung 18 wird zu einer als Fülleinrichtung ausgeführten Behälterbehandlungseinrichtung 22 bewegt. Die Fördereinrichtung befüllt den Behälter 12. Anschließend kann die Bewegungsvorrichtung 18 den Behälter 12 zu einer als Verschließeinrichtung ausgeführten Behälterbehandlungseinrichtung 22 bewegen. Die Verschließeinrichtung verschließt den Behälter 12.

Figur 6 zeigt unterschiedliche Behandlungsstationen einer Behälterbehandlungsanlage 10F, die gemäß einem beispielhaften Behandlungsprofil angefahren werden können.

Zunächst wird der Behälter 12, der auf der Bewegungsvorrichtung 18 gehalten ist, mittels einer als Fülleinrichtung ausgeführten Behälterbehandlungseinrichtung 22 mit einem ersten Aromastoff teilweise gefüllt. Nachfolgend bewegt die Bewegungsvorrichtung 18 den Behälter 12 zu einer weiteren als Fülleinrichtung ausgeführten Behälterbehandlungseinrichtung, die den Behälter 12 mit einem zweiten Aromastoff teilweise befüllt. Anschließend bewegt die Bewegungsvorrichtung 18 den Behälter 12 zu einer weiteren anderen als Fülleinrichtung ausgeführten Behälterbehandlungseinrichtung, die den Behälter 12 mit Fruchtstücken teilweise befüllt.

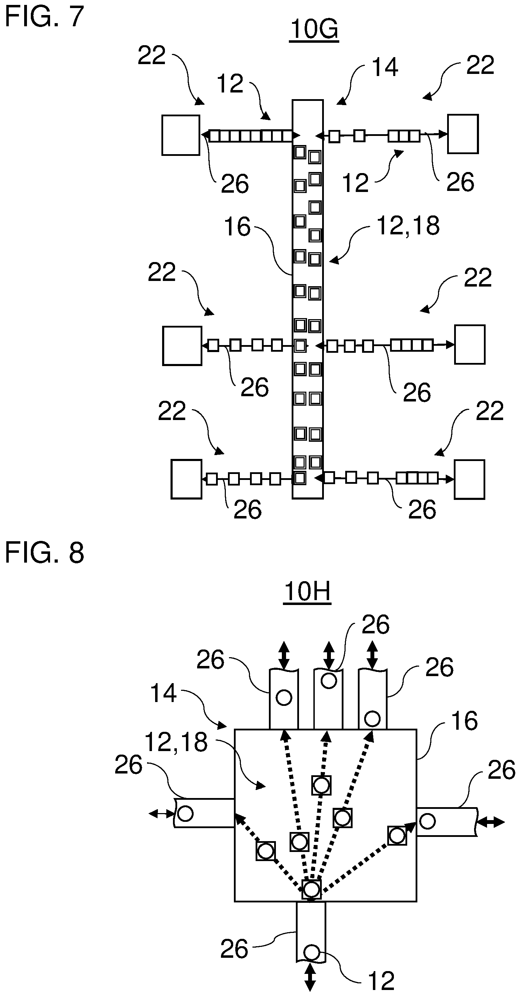

Die Figur 7 zeigt eine Behälterbehandlungsanlage 10G.

Bei der Behälterbehandlungsanlage 10G ist das Planarantriebssystem 14 als eine flexible Linienschnittstelle ausgeführt. Die Linienschnittstelle verbindet verschiedene Behälterbehandlungseinrichtungen 22 miteinander. Das Planarantriebssystem 14 kann somit als eine Art Sortierfläche für die Behälter 12 dienen.

Die Behälterbehandlungseinrichtungen 22 weisen jeweils einen Behälterförderer 26 auf. Die Bewegungsvorrichtungen 18 können die Behälter 12 von einem der Behälterförderer 26 übernehmen und je nach gewünschten Behandlungsprofil an einen anderen der Behälterförderer 26 übergeben. Die Bewegungsvorrichtungen 18 können zum Halten der Behälter 12 beispielsweise unterhalb oder oberhalb oder seitlich von dem jeweiligen Behälter 12 positioniert sein. Die Behälterförderer 26 können bspw. als Bandförderer ausgeführt sein. Die Behälterförderer 26 fördern die übergebenen Behälter 12 zu einem Behandlungselement der jeweiligen Behandlungseinrichtung 22 und/oder zum Grundelement 16 zur Übergabe an die Bewegungsvorrichtungen 18. Nach der Behandlung können die Behälter 12 bspw. wieder zurück zu dem Grundelement 16 bewegt oder an einen Abfuhrförderer (nicht dargestellt in Figur 7) werden.

Vorteilhaft kann die Behälterbehandlungsanlage 10G verschiedene Funktionen in einem System kombinieren. Eine flexible Verteilung und optional Gruppierung von Behältern 12 zu Gebinden wird ermöglicht. Behälter 12 von verschiedener Linien/Maschinen/Anlagenteilen können miteinander vermischt werden bzw. die entsprechenden Linien/Maschinen/Anlagenteilen können miteinander gekoppelt werden. Lücken im Behälterstrom können durch eine entsprechende Bewegung der Bewegungsvorrichtungen 18 geschlossen werden. Behälter 12 oder Gebinde können durch eine entsprechende Bewegung der Bewegungsvorrichtungen 18 gepuffert oder ausgeleitet werden. Eine Geschwindigkeit des Behälterstroms ist durch eine entsprechende Bewegung der Bewegungsvorrichtungen 18 anpassbar. Es werden zudem keine zusätzlichen Garniturenteile für Robotereffektoren o.ä. benötigt. Letztlich kann auch eine Sortierung von Leergut bei Mehrweglinien ermöglicht werden.

Die Figur 8 zeigt eine Behälterbehandlungsanlage 10H.

Die Behälterbehandlungsanlage 10H ist ähnlich zu der Behälterbehandlungsanlage 10G ausgeführt. Im Unterschied zu der Behälterbehandlungsanlage 10G ist das Grundelement 16 der Behälterbehandlungsanlage 10H jedoch nicht streifen- bzw. linienförmig ausgeführt, sondern rechteckig.

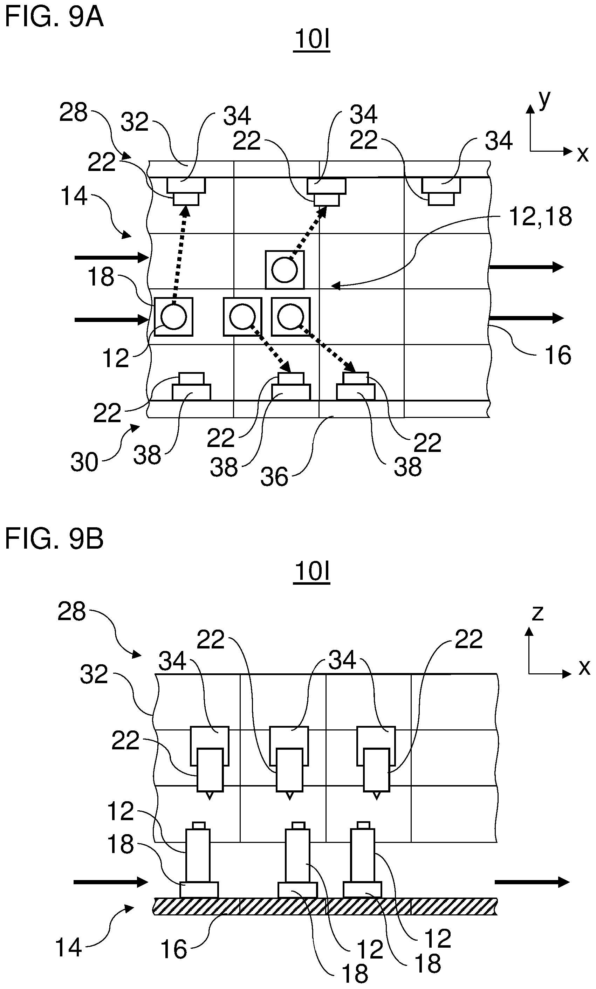

Die Figuren 9A und 9B zeigen eine Behälterbehandlungsanlage 10I.

Die Behälterbehandlungsanlage 10I weist ein zweites Planarantriebssystem 28 und optional ein drittes Planarantriebssystem 30 auf.

Das zweite Planarantriebssystem 28 kann ein Grundelement 32 und mehrere Bewegungsvorrichtungen 34, die jeweils eine Behandlungseinrichtung 22 tragen, aufweisen. Das Grundelement 32 kann geneigt, vorzugsweise senkrecht, zum Grundelement 16 ausgerichtet sein. Es ist allerdings auch möglich, dass die Grundelemente 16 und 32 parallel ausgerichtet und vertikal zueinander beabstandet sind. Das Grundelement 32 ist oberhalb vom Grundelement 16 angeordnet. Das zweite Planarantriebssystem 28 kann sonst im Wesentlichen wie das Planarantriebssystem 14, das die Behälter 12 bewegt, ausgeführt sein.

Das dritte Planarantriebssystem 30 kann ein Grundelement 36 und mehrere Bewegungsvorrichtungen 38, die jeweils eine Behandlungseinrichtung 22 tragen, aufweisen. Das Grundelement 36 kann geneigt, vorzugsweise senkrecht, zum Grundelement 16 und beispielswiese parallel zum Grundelement 32 ausgerichtet sein. Das Grundelement 36 ist oberhalb vom Grundelement 16 angeordnet. Das dritte Planarantriebssystem 30 kann sonst im Wesentlichen wie das Planarantriebssystem 14 ausgeführt sein.

Mittels des (ersten) Planarantriebssystems 14 können die gehaltenen Behälter 12 beispielsweise in einer x-y-Ebene bewegt werden. Mittels des zweiten Planarantriebssystems 28 können die gehaltenen Behandlungseinrichtungen 22 beispielsweise in einer x-z-Ebene (in Figuren 9A und 9B dargestellt) oder beispielsweise einer x-y-Ebene (in Figuren 9A und 9B nicht dargestellt) bewegt werden. Mittels des dritten Planarantriebssystems 30 können die gehaltenen Behandlungseinrichtungen 22 in einer x-z-Ebene bewegt werden.

Während der Behälterbehandlung kann sich eine jeweilige Behandlungseinrichtung 22 mit dem behandelten Behälter 12 mitbewegen, nämlich durch eine aufeinander abgestimmte Bewegung der jeweiligen Bewegungsvorrichtungen 18 und 34 oder 38 (z. B. synchrone Bewegung in der x-Richtung). Zum Behandeln der Behälter 12 kann die jeweilige Behandlungseinrichtung 22 mittels der jeweiligen Bewegungsvorrichtung 34 oder 38 zu dem jeweiligen Behälter 12 hin abgesenkt werden. Nach dem Behandeln des Behälters 12 kann die jeweilige Behandlungseinrichtung 22 mittels der jeweiligen Bewegungsvorrichtung 34 oder 38 von dem jeweiligen Behälter 12 entfernt werden, z. B. Bewegung in der z-Richtung.

Die Behandlungseinrichtungen 22 sind bevorzugt Fülleinrichtungen zum Befüllen der Behälter 12. Andere oder zusätzliche Behandlungseinrichtungen 22 sind ebenfalls möglich (z. B. Behälterherstelleinrichtung (z. B. Streckblasstation), Prüfeinrichtung, Druckeinrichtung usw.). Die Fülleinrichtungen können mit flexiblen Schlauchleitungen mit unterschiedlichen Füllmedien versorgt werden. Es ist möglich, dass in den Bewegungsvorrichtungen 18 eine Wägefunktion zum Wiegen der Behälter 12 integriert ist. So kann bspw. eine gewichtsabhängige Befüllung mittels der Fülleinrichtungen gesteuert werden.

Es ist möglich, dass das Grundelement 16 einen Puffer oder eine Pufferspur zum Puffern von Behältern 12 auf den Bewegungsvorrichtungen 18 aufweist. Der Puffer bzw. die Pufferspur kann bspw. mittig bezüglich des Grundelements 16 angeordnet sein.

Die Behälterbehandlungsanlage 10I ermöglicht eine besonders flexible Zuordnung von einzeln bewegbaren Behandlungseinrichtungen 22 zu einzeln bewegbaren Behältern 12. Die Behälter 12 können gemäß dem gewünschten Behandlungsprofil flexibel einer entsprechenden Behandlungseinrichtung 22 zugeordnet werden. Die Behälter 12 können sich mit den zugeordneten Behandlungseinrichtungen 22 mitbewegen, wodurch ein "kontinuierliches Takten" ermöglicht wird. Vorteilhaft kann die Ausstoßleistung durch das "kontinuierliche Takten" (Weiterfahrt während der Behandlung) erhöht werden.

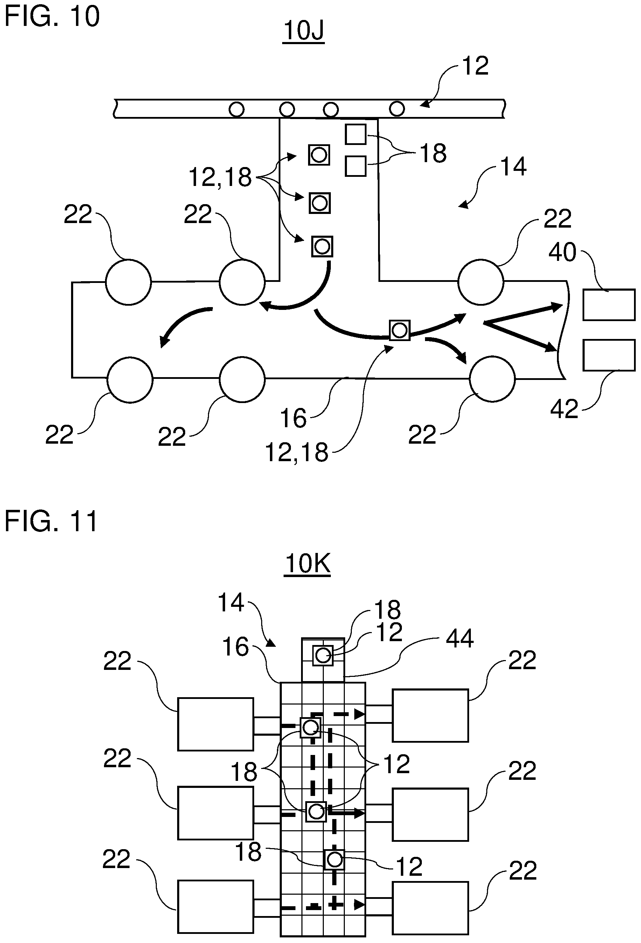

Die Figur 10 zeigt eine Behälterbehandlungsanlage 10J.

Die Behandlungseinrichtungen 22 sind bevorzugt alle als Prüfeinrichtungen, z. B. Messstationen, ausgeführt. Mittels der Bewegungsvorrichtungen 18 können die Behälter 12 beispielsweise gemäß einem gewünschten Behandlungsprofil zu einer oder mehreren der Prüfeinrichtungen bewegt werden. Die Prüfeinrichtungen sind zumindest teilweise unterschiedlich ausgebildet, um unterschiedliche Aspekte der Behälter 12 zu prüfen. Vorteilhaft kann die Behälterbehandlungsanlage 10J somit als ein automatisiertes Prüflabor ausgeführt sein, das flexibel aufgebaut werden kann.

Je nach Prüfungsergebnis durch die Prüfeinrichtungen können die Behälter 12 weitergeleitet werden. Sofern der Behälter 12 alle Prüfungen erfolgreich bestanden hat, kann der Behälter 12 beispielsweise zurück zum ursprünglichen Behälterstrom oder einen separaten Abfuhrförderer (nicht in Figur 10 dargestellt) bewegt werden. Sofern eine Prüfung eine Beanstandung ergibt, kann der Behälter 12 ausgeleitet werden. Die Ausleitung kann dabei von der jeweiligen Beanstandung (z. B. Unterfüllung, Überfüllung, Verschlussschrägsitz, Sprung im Behälter etc.) abhängen. In Abhängigkeit von der jeweiligen Beanstandung kann der Behälter 12 beispielsweise an eines von mehreren Ausleitsystemen 40, 42 (z. B. Ausleitförderer oder Ausleitbereiche) übergeben werden, und somit vorzugsweise geordnet nach (Kategorie der) Beanstandung ausgeleitet werden.

Die Figur 11 zeigt eine Behälterbehandlungsanlage 10K.

Die Behälterbehandlungsanlage 10K ist ähnlich zu der Behälterbehandlungsanlage 10G von Figur 7 als eine flexible Linienschnittstelle aufgebaut. Im Unterschied zur Behälterbehandlungsanlage 10G können die Behandlungseinrichtungen 22 der Behälterbehandlungsanlage 10K die Behälter 12 behandeln, während diese von den Bewegungsvorrichtungen 18 gehalten sind.

Das Grundelement 16 weist einen Pufferbereich 44 auf, in dem ungenutzte Bewegungsvorrichtungen 18 abgestellt werden können oder in dem Bewegungsvorrichtungen 18 mit Behältern 12 auf ein Freiwerden der nächsten gewünschten Behandlungseinrichtung 22 warten können.

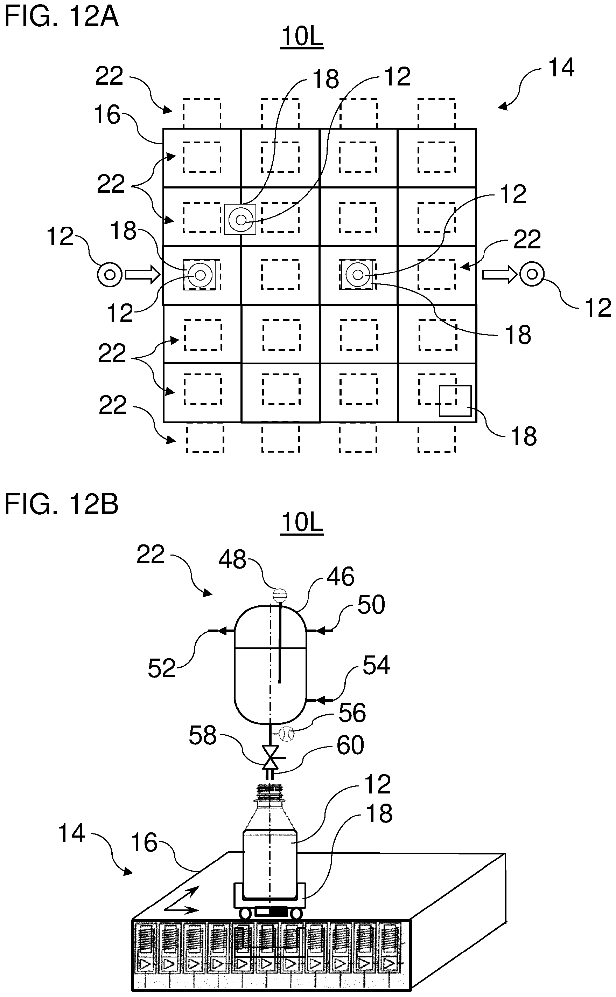

Die Figur 12A zeigt eine Behälterbehandlungsanlage 10L, und die Figur 12B zeigt einen Abschnitt der Behälterbehandlungsanlage 10L.

Das Grundelement 16 ist durch eine schachbrettartige Zusammenfassung von Kacheln gebildet. Oberhalb des Grundelements 16 sind mehrere Behandlungseinrichtungen 22 angeordnet, z. B. aufgehängt. Die oberhalb des Grundelements 16 angeordneten Behandlungseinrichtungen 22 sind vorzugsweise als Fülleinrichtungen zum Befüllen der Behälter 12 ausgebildet. Die Behandlungseinrichtungen 22 können vorzugsweise in mehreren Reihen und Spalten schachbrettartig oberhalb von dem Grundelement 16 angeordnet sein. Zusätzlich können auch seitlich am Grundelement 16 mehrere Behandlungseinrichtungen 22, wie z. B. Prüfeinrichtungen, Etikettiereinrichtungen, Bedruckungseinrichtungen, Behälterspüleinrichtungen, Behälterentkeimungseinrichtungen, Verschließeinrichtungen usw., angeordnet sein.

Die Behälter 12 werden von den Bewegungsvorrichtungen 18 jeweils zu einer gewünschten Auswahl an Behandlungseinrichtungen 22 bewegt, gemäß dem jeweils gewünschten Behandlungsprofil. Unterhalb einer Fülleinrichtung positioniert kann der Behälter 12 von der jeweiligen Fülleinrichtung gefüllt werden. Es ist möglich, dass nacheinander verschiedene Fülleinrichtungen angefahren werden, um ein Rezept zur Füllung des Behälters zu erfüllen. Beispielsweise können nacheinander stilles Wasser, mindestens ein Sirup, mindestens ein Geschmacksstoff und/oder karbonisiertes Wasser von verschiedenen Fülleinrichtungen in einen Behälter 12 eingefüllt werden, je nach Rezept bzw. Behandlungsprofil. Vor dem Auffüllen mit karbonisierten Wasser kann der Behälter 12 vorzugsweise gewogen werden, um die Füllmenge zu kontrollieren und die einzelnen Füllungenauigkeiten beim letzten Füllschritt kompensieren zu können. Zum Wiegen kann bspw. eine in den Bewegungsvorrichtungen 18 integrierte Wiegevorrichtung verwendet werden.

Die Figur 12B stellt eine als Fülleinrichtung ausgebildete Behandlungseinrichtung 22 im Detail dar.

Die Behandlungseinrichtung 22 weist einen Flüssigkeitsspeicher 46, einen Füllstandsensor 48, eine Überlagerungsgaszufuhr 50, eine Überlagerungsgasabfuhr 52 sowie eine Flüssigkeitszufuhr 54 auf.

Im Flüssigkeitsspeicher 46 kann die in die Behälter 12 einzufüllende Flüssigkeit gespeichert sein. Über die Flüssigkeitszufuhr 54 kann die Flüssigkeit in den Flüssigkeitsspeicher 46 zugeführt werden. Der Füllstandsensor 48 kann einen Flüssigkeitsfüllstand des Flüssigkeitsspeichers 46 erfassen, um bspw. die Flüssigkeitszufuhr anzupassen. Der Füllstandsensor 48 kann beispielsweise als Höhensonde ausgeführt sein. Über die Überlagerungsgaszufuhr 50 kann ein Überlagerungsgas, z. B. Stickstoff, zu dem Flüssigkeitsspeicher 46 zugeführt werden. Über die Überlagerungsabfuhr kann das Überlagerungsgas aus dem Flüssigkeitsspeicher 46 abgeführt werden. Das Überlagerungsgas vermeidet den Kontakt der Flüssigkeit mit der Umgebungsluft, welche für die Flüssigkeit schädlich sein kann.

Die Behandlungseinrichtung 22 weist einen Durchflussmesser 56, ein Füllventil 58 und einen Auslauf 60 auf. Sobald ein Behälter 12 unterhalb des Auslaufs 60 von einer Bewegungsvorrichtung 18 positioniert wurde, kann das Füllventil 58 geöffnet werden. Flüssigkeit fließt aus dem Flüssigkeitsspeicher 46 und dem Auslauf 60 in den Behälter 12. Der Durchflussmesser 56 erfasst die Flüssigkeitsmenge, die den Flüssigkeitsspeicher 46 in Richtung zum Auslauf 60 verlässt. Basierend auf einer Erfassung des Durchflussmessers 56 kann das Füllventil 58 geschlossen werden, wenn eine gewünschte Flüssigkeitsmenge zum Füllen des Behälters 12 erfasst wurde. Vorteilhaft wird so eine genaue Dosierung ermöglicht.

Es ist möglich, dass Bewegungsvorrichtungen 18 in eine Parkposition auf dem Grundelement 16 bewegt werden können, siehe beispielsweise die Bewegungsvorrichtungen 18 unten rechts in Figur 12A.

Vorteilhaft ermöglicht die Behandlungsanlage 10L eine sehr kompakte Bauweise einer Abfüllanlage durch die schachbrettartige Anordnung von Behandlungseinrichtungen 22 über dem Grundelement 16. Die Verfahrwege sind nicht spurgebunden, wie bei einer herkömmlichen Behälterbehandlungsanlage, sondern für jeden Behälter 12 kann der optimale Verfahrweg auf dem Transportsystem eingerichtet werden. Das System kann sich zudem fortlaufend optimieren. Die Behandlungsanlage 10L ist modular aufgebaut, und es können schnell einzelne Behandlungseinrichtungen 22 dazu gebaut, umgebaut bzw. dazu geschaltet oder abgeschaltet werden. Eine Querkontamination zwischen den einzelnen Füll- bzw. Behandlungseinrichtungen ist nicht möglich, da für jedes Füllgut ein eigener Strang (Dosiereinheit) vorgesehen sein kann. Unterschiedliche Rezepte mit unterschiedlichen Behandlungs- bzw. Abfüllzeiten haben keine Auswirkung auf den Gesamtdurchsatz der Behandlungsanlage 10L. Außerdem ist ein hoher Individualisierungsgrad möglich, vorzugsweise in Kombination mit digital bedruckten Etiketten.

Die Figuren 13A und 13B zeigen eine Behälterbehandlungsanlage 10M. Der Einfachheit halber ist die Behälterbehandlungsanlage 10M ohne Behandlungseinrichtungen dargestellt bzw. lediglich die Behälterübergabebereiche sind dargestellt.

Die Behälterbehandlungsanlage 10M weist einen Einlaufförderer 62 (z. B. Bandförderer) und einen Auslaufförderer (z. B. Bandförderer) 64 auf. Der Einlaufförderer 62 weist einen Auslaufbereich 66 (z. B. Überschubplatte) zum Übergeben der Behälter 12 an die Bewegungsvorrichtungen 18 auf. Der Auslaufförderer 64 weist einen Einlaufbereich 68 (z. B. Überschubplatte) zum Übernehmen von Behältern von den Bewegungsvorrichtungen 18 auf. Der Auslaufbereich 66 und der Einlaufbereich 68 sind kammförmig. Der Auslaufbereich 66 und der Einlaufbereich 68 sind oberhalb von dem Grundelement 16 angeordnet. Zusätzlich kann eine Schubeinrichtung 70, z. B. eine Schubkette mit Schubbalken, oberhalb des Einlaufbereichs 68 und des Grundelements 16 angeordnet sein. Die Schubeinrichtung 70 kann eine Förderrichtung aufweisen, die einer Förderrichtung des Auslaufförderers 64 entspricht. Eine Aufstandsfläche 72 der Bewegungsvorrichtungen 18 für die Behälter 12 ist aus mehreren Stegen gebildet.

Der Einlaufförderer 62 fördert die Behälter 12 einzeln oder in Gebinden mit konstanter Geschwindigkeit auf den kammförmigen Auslaufbereich 66. Die Bewegungsvorrichtungen 18 werden unter den Auslaufbereich 66 bewegt. Die Bewegungsvorrichtungen 18 bewegen sich in der Förderrichtung des Einlaufförderers 62 synchron mit den Behältern 12. Die Bewegungsvorrichtungen 18 vollführen eine Hubbewegung nach oben bezüglich des Grundelements 16. Die Bewegungsvorrichtungen 18 erhöhen so ihre Schwebehöhe. Dabei treten die Stege der Aufstandsfläche 72 durch den kammförmigen Auslaufbereich 66. Die Behälter 12 werden durch die Aufstandsfläche 72 angehoben. Die Behälter 12 können so vom Auslaufbereich 66 auf die Aufstandsfläche 72 der Bewegungsvorrichtungen 18 übernommen werden. Während des gesamten Übernahmevorgangs können sich die Behälter 12 und die Bewegungsvorrichtungen 18 mit einer identischen Bahngeschwindigkeit bewegen. Nach erfolgter Behälterübernahme kann die jeweilige Bewegungsvorrichtung 18 die Schwebehöhe bezüglich des Grundelements 16 wieder verringern und mit einer gewünschten (z. B. erhöhten) Geschwindigkeit zu einer gewünschten Behandlungseinrichtung (nicht dargestellt in Figuren 13A und 13B) bewegt werden. Unterdessen kann sich bereits die nachfolgende Bewegungsvorrichtung 18 auf den oder die nächsten zu übernehmenden Behälter 12 aufsynchronisieren.

Die Behälterübergabe von den Bewegungsvorrichtungen 18 an den Auslaufförderer 64 kann im Wesentlichen in umgekehrter Reihenfolge zur Behälterübernahme ablaufen. Die Bewegungsvorrichtungen 18 bewegen sich mit erhöhter Schwebehöhe in den kammförmigen Einlaufbereich 68 und senken sich dann bezüglich des Grundelements 16 ab. Ein Schubbalken der Schubeinrichtung 70 schiebt die Behälter 12 über den Einlaufbereich 68 auf den Auslaufförderer 64, z. B. mit einer konstanten Geschwindigkeit. Die leeren Bewegungsvorrichtungen 18 bewegen sich anschließend zurück zum Auslaufbereich 66 des Einlaufförderers 66, um den/die nächsten Behälter 12 zu übernehmen.

Durch das kontinuierliche Übernahme- und Übergabeprinzip wird gegenüber einem getakteten System (z. B. mit Verzögern der Bewegungsvorrichtungen bis zum Stillstand zum Behältertransfer und anschließender Beschleunigung) eine erhebliche Durchsatzsteigerung erreicht, womit auch die Leistungsfähigkeit des Planarantriebssystems 14 besser ausgenutzt wird. Zusätzlich kann das Umsturzrisiko bei Behältern 12 mit geringer Standfestigkeit (z. B. leere, hohe und/oder schmale Behälter 12) im Vergleich zu getakteten Systemen verringert werden, wodurch sich ebenfalls der Durchsatz erhöhen lässt.

Die Figuren 14A und 14B zeigen eine Behälterübernahme in drei Prozessschritten bei einer nur ausschnittsweise dargestellten Behälterbehandlungsanlage 10N. Der Einfachheit halber ist die Behälterbehandlungsanlage 10N ohne Behandlungseinrichtungen dargestellt bzw. lediglich der Behälterübernahmebereich ist dargestellt.

Der Auslaufbereich 66' weist im Gegensatz zum Auslaufbereich 66 eine angeschrägte Unterseite auf. Die Unterseite läuft bevorzugt spitz zu einem freien (Auslauf-) Ende des Auslaufbereichs 66' zu. Die Aufstandsfläche der Bewegungsvorrichtungen 18 können beispielsweise als plane Flächen ausgeführt sein.

Der Einlaufförderer 62 (nicht dargestellt in Figuren 14A und 14B) fördert die Behälter 12 einzeln oder in Gebinden mit konstanter Geschwindigkeit auf den Auslaufbereich 66'. Die Bewegungsvorrichtungen 18 werden unter den Auslaufbereich 66' bewegt. Die Bewegungsvorrichtungen 18 bewegen sich in der Förderrichtung des Einlaufförderers 62 synchron mit den Behältern 12. Die Bewegungsvorrichtungen 18 werden entsprechend der Schräge der Unterseite des Auslaufbereichs 66' geneigt zum Grundelement 16 (nicht dargestellt in Figuren 14A und 14B) ausgerichtet. Die Bewegungsvorrichtungen 18 vollführen zudem eine Hubbewegung nach oben bezüglich des Grundelements 16. Die Bewegungsvorrichtungen 18 erhöhen so ihre Schwebehöhe. Die Bewegungsvorrichtungen 18 bewegen sich somit entlang der angeschrägten Unterseite und tauchen direkt am freien Ende des Auslaufbereichs 66' auf. Hier werden die Behälter 12 dann auf die auftauchenden Bewegungsvorrichtungen 18 geschoben. Während des gesamten Übernahmevorgangs können sich die Behälter 12 und die Bewegungsvorrichtungen 18 mit einer identischen Bahngeschwindigkeit bewegen. Nach erfolgter Behälterübernahme kann die jeweilige Bewegungsvorrichtung 18 die Schwebehöhe bezüglich des Grundelements 16 wieder verringern und mit einer gewünschten (z. B. erhöhten) Geschwindigkeit zu einer gewünschten Behandlungseinrichtung (nicht dargestellt in Figuren 14A und 14B) bewegt werden. Unterdessen kann sich bereits die nachfolgende Bewegungsvorrichtung 18 auf den oder die nächsten zu übernehmenden Behälter 12 aufsynchronisieren.

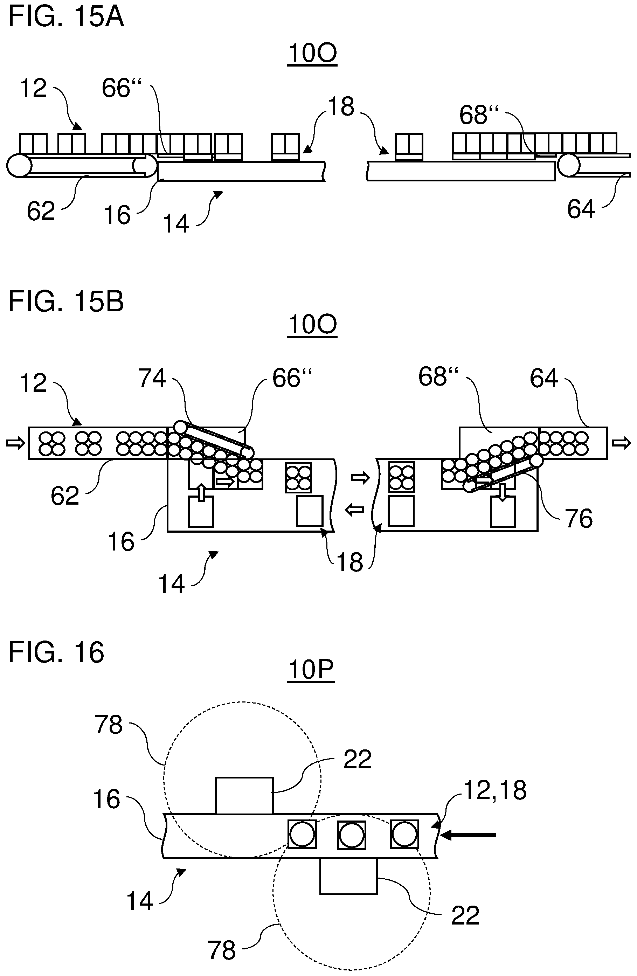

Die Figuren 15A und 15B zeigen eine Behälterbehandlungsanlage 10O. Der Einfachheit halber ist die Behälterbehandlungsanlage 10O ohne Behandlungseinrichtungen dargestellt bzw. lediglich die Behälterübergabebereiche sind dargestellt.

Die Behälterbehandlungsanlage 10O weist eine erste Überschubeinrichtung 74 und eine zweite Überschubeinrichtung 76 auf. Die Überschubeinrichtung 74 ist quer über dem Auslaufbereich 66" angeordnet. Die Überschubeinrichtung 76 ist über dem Grundelement 16 seitlich zum Einlaufbereich 68" angeordnet. Die Überschubeinrichtung 76 erstreckt sich quer hin zu dem Einlaufbereich 68". Die Überschubeinrichtungen 74, 76 können bspw. als Förderbänder oder Behältergeländer ausgeführt sein.

Der Einlaufförderer 62 fördert die Behälter 12 einzeln oder in Gebinden mit konstanter Geschwindigkeit auf den Auslaufbereich 66". Die Bewegungsvorrichtungen 18 werden seitlich neben den Auslaufbereich 66" bewegt. Die Bewegungsvorrichtungen 18 bewegen sich in der Förderrichtung des Einlaufförderers 62 synchron mit den Behältern 12. Die Überschubeinrichtung 74 führt die sich auf dem Auslaufbereich 66" in der Förderrichtung des Einlaufförderers 62 bewegenden Behälter 12 quer zur Förderrichtung auf die Bewegungsvorrichtungen 18. Die Behälter 12 können so vom Auslaufbereich 66" auf die Bewegungsvorrichtungen 18 übernommen werden. Während des gesamten Übernahmevorgangs können sich die Behälter 12 und die Bewegungsvorrichtungen 18 mit einer identischen Bahngeschwindigkeit bewegen. Nach erfolgter Behälterübernahme kann die jeweilige Bewegungsvorrichtung 18 sich vom Auslaufbereich 66' entfernen und mit einer gewünschten (z. B. erhöhten) Geschwindigkeit zu einer gewünschten Behandlungseinrichtung (nicht dargestellt in Figuren 15A und 15B) bewegt werden, usw.

Die Behälterübergabe von den Bewegungsvorrichtungen 18 an den Auslaufförderer 64 kann im Wesentlichen in umgekehrter Reihenfolge zur Behälterübernahme ablaufen. Die Bewegungsvorrichtungen 18 bewegen sich seitlich neben dem Einlaufbereich 68". Die Überschubeinrichtung 76 führt die Behälter 12 quer zur Förderrichtung auf den Einlaufbereich 68". Die Bewegungsvorrichtungen 18 können sich dabei mit einer Geschwindigkeit bewegen, die im Wesentlichen gleich einer Fördergeschwindigkeit des Auslaufförderers 64 ist. Die leeren Bewegungsvorrichtungen 18 bewegen sich anschließend zurück zum Auslaufbereich 66" des Einlaufförderers 62, um den/die nächsten Behälter 12 zu übernehmen.

Die Figur 16 zeigt einen Abschnitt einer Behälterbehandlungsanlage 10P.

Anhand der Behälterbehandlungsanlage 10P ist exemplarisch dargestellt, wie der Einsatz des Planarantriebssystems 14 den Aufbau einer Behälterbehandlungsanlage vereinfachen kann. Das Planarantriebssystem 14 kann nämlich derart eingesetzt werden, dass es die herkömmlich verwendeten Transfersterne oder Karussellbehandlungseinrichtungen 78 (gestrichelt in Figur 16 dargestellt) ersetzen kann. Statt der Behälterförderung mittels der sich drehenden Sternförderer oder Karussellbehandlungseinrichtungen 78 können die Behälter 12 mit den Bewegungsvorrichtungen 18 zu den gewünschten Behandlungseinrichtungen 22 bewegt werden.

Vorteilhaft können die Bewegungsvorrichtungen 18 dabei auch Höhenunterschiede durch relative Hubbewegungen zum Grundelement 16 ausgleichen. Ebenso kann eine teilungsgerechte Behälterübergabe erfolgen, die zudem einfach steuerungstechnisch anpassbar ist. Eine Entkopplung ist nicht erforderlich. Sicherheitsbereiche oder Pufferbereiche sind nicht oder zumindest nur in kleinem Ausmaß notwendig. Dadurch kann deutlich kompakter gebaut werden, was beispielsweise für Blocksysteme sehr relevant sein kann. Zudem können durch das Planarantriebssystem 14 hohe Hygieneanforderungen erfüllt werden.

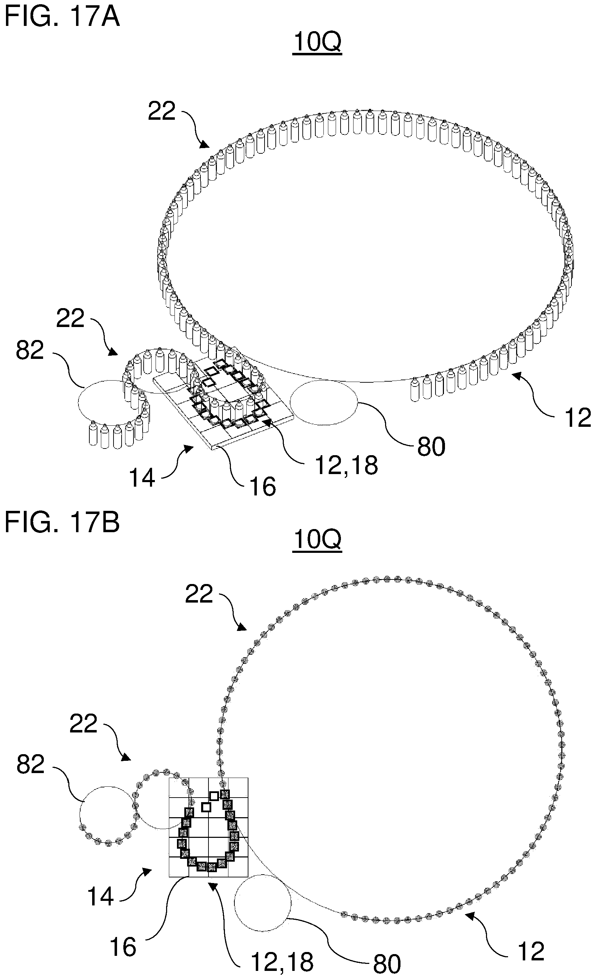

Die Figuren 17A und 17B zeigen eine Behälterbehandlungsanlage 10Q.

Die Behälterbehandlungsanlage 10Q weist beispielshaft eine als Fülleinrichtung, vorzugsweise Füllerkarussell, ausgeführte Behandlungseinrichtung 22 (großer Kreis mit Bezugszeichen 22 in Figuren 17A und 17B) und eine als Verschließeinrichtung, vorzugsweise Verschließerkarussell, ausgeführte Behandlungseinrichtung 22 (kleiner Kreis mit Bezugszeichen 22 in Figuren 17A und 17B) auf. Die Behandlungseinrichtungen 22 sind mittels des Planarantriebssystems 14 miteinander verbunden. Die Behälterbehandlungsanlage 10Q kann weitere Behandlungseinrichtungen aufweisen, die mit dem Planarantriebssystem 14 verbunden sind (der Einfachheit halber nicht dargestellt in Figuren 17A und 17B). Ein Einlauftransferstern 80 kann stromaufwärts der als Fülleinrichtung ausgeführten Behandlungseinrichtung 22 angeordnet sein. Ein Auslauftransferstern 82 kann stromabwärts der als Verschließeinrichtung ausgeführten Behandlungseinrichtung 22 angeordnet sein.

Das Planarantriebssystem 14 kann mittels der Bewegungsvorrichtungen 18 die gefüllten und unverschlossenen Behälter 12 von der Fülleinrichtung übernehmen, zu der Verschließeinrichtung bewegen und an die Verschließeinrichtung zum Verschließen der Behälter 12 übergeben. Die Behälter 12 können an den Bewegungsvorrichtungen 18 mittels jeglicher geeigneter Halterung gehalten werden. Vorzugsweise kann jede Bewegungsvorrichtung 18 einen der Behälter 12 transportieren.

Das Planarantriebssystem 14 ermöglicht, dass die Behälter 12 mittels der Bewegungsvorrichtungen 18 in einer Ebene auf einem beliebigen Pfad bzw. Kurvenverlauf von der Fülleinrichtung zu der Verschließeinrichtung bzw. allgemein von einer Behandlungseinrichtung 22 zur nächsten Behandlungseinrichtung 22 bewegt werden können. Der Pfad kann somit je nach Anforderung optimal gestaltet werden, vorzugsweise um ein Überschwappen oder Umkippen der Behälter 12 zu vermeiden.

Herkömmlich ist nämlich insbesondere der Übergang zwischen Füllerkarussell und Verschließer problematisch, ganz besonders bei Hochleistungsmaschinen. Der gefüllte, unverschlossene Behälter verlässt herkömmlich das Füllerkarussell über einen Auslaufstern. Vom Auslaufstern wird der Behälter direkt in den Verschließer übergeben. An den beiden Übergabepunkten des Auslaufsterns erfährt der Behälter einen Beschleunigungswechsel. Dies führt häufig zu einem ungewollten Herausschwappen der Flüssigkeit aus dem Behälter. Auch alternative Konzepte, z. B. Transfer des Behälters vom Füllerkarussell zum Verschließer mittels Langstator-Linearmotor (LLM), scheitern in der Praxis häufig an der mangelnden Flexibilität dieser Systeme. Durch die begrenzte Anzahl von Segmentvarianten (meist 3-5 Stück) kann der Streckenverlauf nur sehr eingeschränkt an das technisch sinnvolle Optimum angepasst werden.

Bei der Behandlungseinrichtung 10Q kann der Pfad der Behälter 12 / der Bewegungsvorrichtungen 18 hingegen von der Steuereinheit 20 (nicht gesondert in Figuren 17A und 17B dargestellt) des Planarantriebssystems 14 beispielsweise derart angepasst sein, dass die auf den jeweiligen Behälter 12 wirkende Querbeschleunigung minimiert wird. Es ist auch möglich, dass die Bewegungsvorrichtungen 18 während des Transports der Behälter 12 derart relativ zum Grundelement 16 geneigt werden, dass ein Risiko zum Überschwappen weiter verringert wird. Es ist ebenfalls möglich, dass eine Teilung zwischen den Behältern 12 (Abstand der Behälter 12 zueinander) bei der Bewegung mittels der Bewegungsvorrichtungen 18 wie gewünscht auf eine Teilung der Verschließeinrichtung angepasst wird, z. B. verringert oder vergrößert wird. Es kann ebenso eine Bahngeschwindigkeit der Bewegungsvorrichtungen 18 beim Transport der Behälter 12 verringert werden, was ebenfalls die Querbeschleunigungen bei Kurvenfahrten verringert. Ebenso kann es vorteilhaft sein, im Bereich einer als Stickstoffdroppler (nicht dargestellt in den Figuren 17A und 17B) ausgeführten Behandlungseinrichtung die Geschwindigkeit der Bewegungsvorrichtungen 18 zu reduzieren, da der Stickstoff dann präziser in die Behälter 12 dosiert werden kann. Am Ende des Pfades können die Bewegungsvorrichtungen 18 die Behälter 12 in der gewünschten Ausrichtung, mit der gewünschten Teilung und der gewünschten Geschwindigkeit an die Verschließeinrichtung bzw. allgemein die nächste gewünschte Behandlungseinrichtung 22 übergeben werden.

Es ist möglich, dass die Bewegungsvorrichtungen 18 eine mechanische Führung (nicht dargestellt in Figuren 17A und 17B), z. B. in Form eines mechanischen Fahrwerks (z. B. mit Rädern, Rollen oder Gleitschuhen), aufweist. Die mechanische Führung kann die Bewegungsvorrichtungen 18 physisch an dem Grundelement 16 abstützen. Das Planarantriebssystem 14 übernimmt dann noch im Wesentlichen den Vortrieb der Bewegungsvorrichtungen 18. Die mechanische Führung kann die Nutzlast der Bewegungsvorrichtungen 18 sowie die Prozesssicherheit / Robustheit insgesamt erhöhen.

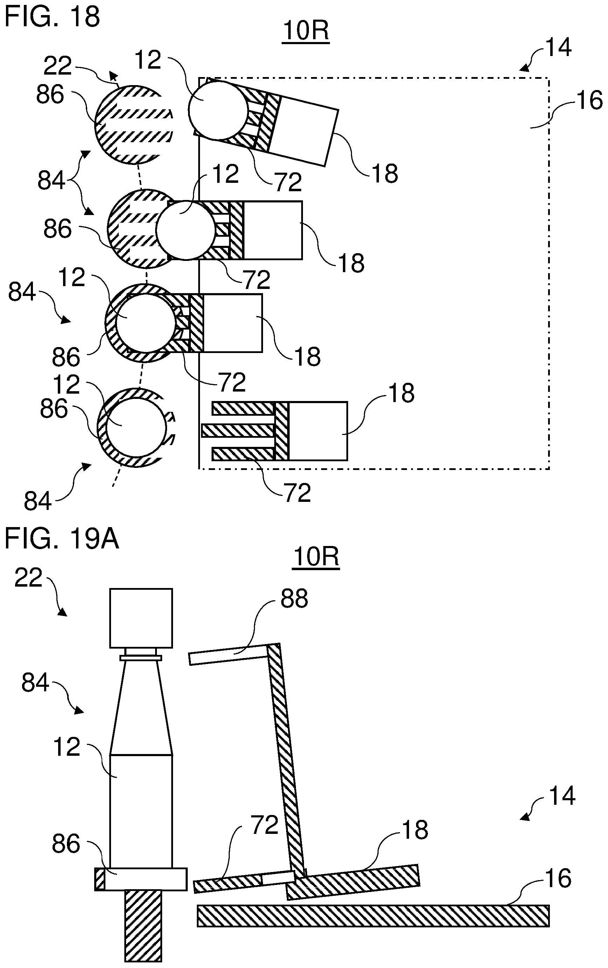

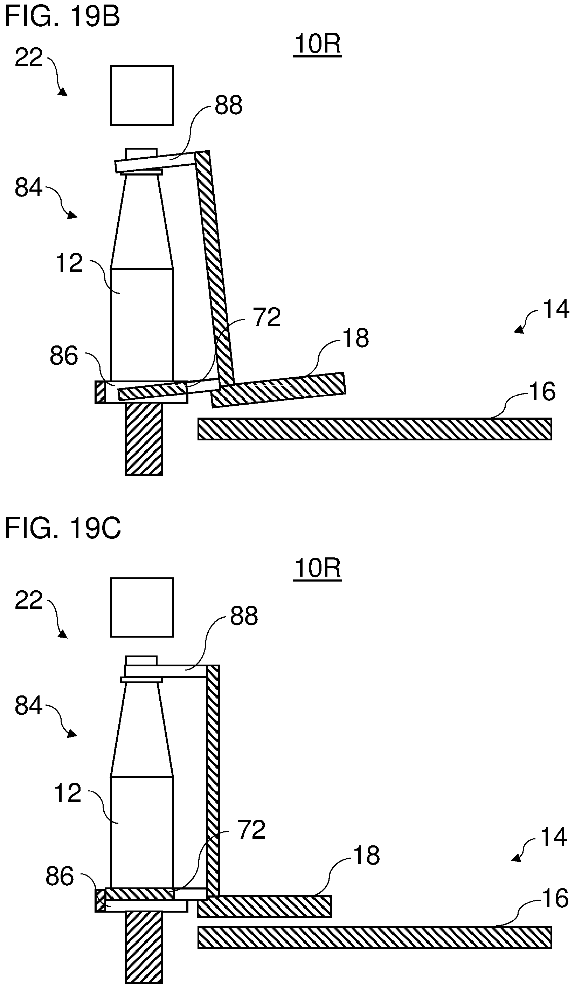

Die Figuren 18 und 19A bis 19C zeigen eine Behälterbehandlungsanlage 10R bzw. einen Ausschnitt daraus.

Die Behälterbehandlungsanlage 10R kann eine Behandlungseinrichtung 22 mit mehreren Behandlungsstationen 84 aufweisen. Bevorzugt ist die Behandlungseinrichtung als ein drehbares Karussell (z. B. Füllerkarussell) bzw. Rundläufer ausgeführt, bei dem sich die Behandlungsstationen 84 zusammen mit den zu behandelnden Behältern 12 auf einer Kreisbahn drehen können. Die Behandlungsstationen 84 sind rein beispielhaft als Füllstationen zum Füllen der Behälter 12 ausgeführt.

Die Behandlungsstationen 84 können jeweils eine Aufstandsfläche 86 zum bodenseitigen Abstützen der Behälter 12 aufweisen. Die Aufstandsfläche 86 kann durch mehrere, vorzugsweise parallele, Stege gebildet sein. Bevorzugt sind die Stege so miteinander verbunden, dass die Aufstandsfläche 86 eine Rechenform bzw. Kammform aufweist.

Die Bewegungsvorrichtungen 18 können jeweils ebenfalls eine Aufstandsfläche 72 für die Behälter 12 aufweisen. Die Aufstandsfläche 72 kann durch mehrere, vorzugsweise parallele, Stege gebildet sein. Bevorzugt sind die Stege so miteinander verbunden, dass die Aufstandsfläche 72 eine Rechenform bzw. Kammform aufweist.

Optional können die Bewegungsvorrichtungen 18 eine Behälterhalterung 88 aufweisen. Die Behälterhalterung 88 kann oberhalb von der Aufstandsfläche 72 der jeweiligen Bewegungsvorrichtung 18 angeordnet sein. Die Behälterhalterung 88 kann den Behälter 12 seitlich halten, z. B. am Behälterrumpf oder am Behälterhals. Bevorzugt weist die Behälterhalterung 88 eine Behälterklammer auf. Die Behälterklammer kann bspw. eine aktive Klammer sein, die zum Öffnen und/oder Schließen aktiv betätigbar ist. Alternativ kann die Behälterklammer bspw. eine passive Klammer sein, die vorzugsweise zum Schließen (z. B. feder-) vorgespannt ist. Besonders bevorzugt kann ein Behälter 12 zwischen der Aufstandsfläche 72 und der Behälterhalterung 88 einspannbar sein. Beispielsweise kann die Behälterhalterung 88 den Behälter 12 direkt oberhalb von einem Halsring des jeweiligen Behälters 12 halten.

Es ist möglich, dass die Behälterhalterung 88 eine Behälterhalsklammer, die zum Halten eines Behälters 12 am Behälterhals angeordnet ist, und eine Behälterrumpfklammer, die zum Halten des Behälters 12 am Behälterrumpf angeordnet ist, aufweist.

Zur Übernahme eines Behälter 12 kann eine jeweilige Bewegungsvorrichtung 18 sich mit einer Behandlungsstation 84 mitbewegen. Die Bewegungsvorrichtung 18 kann dabei so relativ zur Behandlungsstation 84 bewegt werden, dass die Aufstandsfläche 72 in die Aufstandsfläche 86 eintaucht. Bspw. kann die Bewegungsvorrichtung 18 dabei geneigt werden und/oder einen Abstand zum Grundelement 16 verringern. Beim Eintauchen können die jeweiligen Stege der Aufstandsflächen 72, 86 miteinander kämmen. Nachdem die Aufstandsfläche 72 in die Aufstandsfläche 86 eingetaucht ist, kann die Bewegungsvorrichtung 18 eine Hubbewegung nach oben machen, z. B. eine reine Vertikalbewegung oder eine Neigebewegung bzw. eine Kippbewegung nach oben in eine Horizontalausrichtung der Bewegungsvorrichtung 18 oder darüber hinaus. Dabei kann die Aufstandsfläche 72 den Behälter 12 von der Aufstandsfläche 86 übernehmen. Zusätzlich kann sich die optionale Behälterhalterung 88 schließen, wenn der Behälter 12 auf der Aufstandsfläche 72 abgestützt ist.

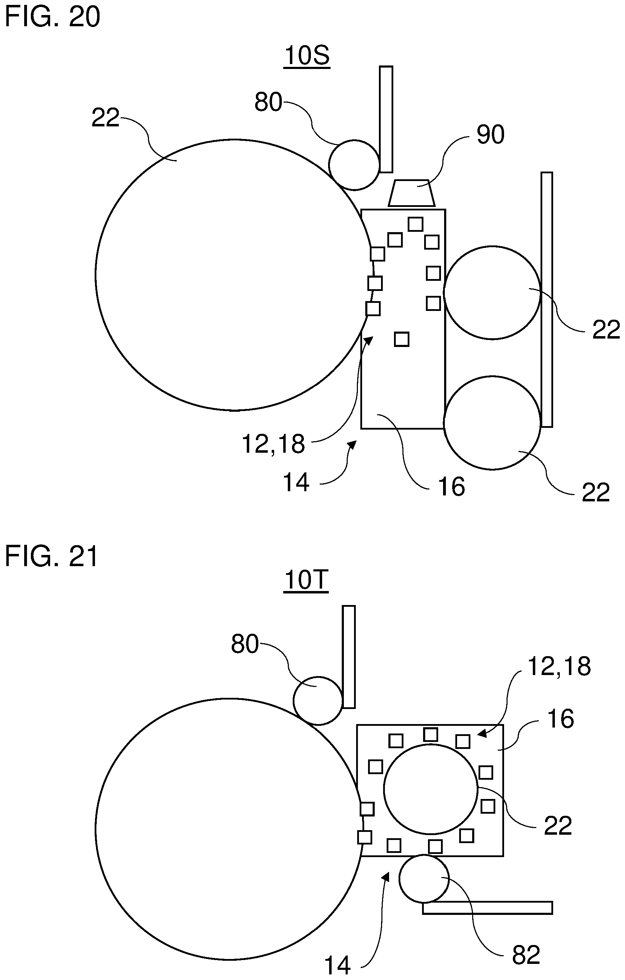

Die Figur 20 zeigt eine Behälterbehandlungsanlage 10S ähnlich zu der Behälterbehandlungsanlage 10Q der Figuren 17A und 17B.

Die Behälterbehandlungsanlage 10S kann bspw. eine als Füllvorrichtung, vorzugsweise Füllerkarussell, ausgeführte Behandlungseinrichtung 22 (links in Figur 20) und als erste und zweite Verschließeinrichtungen, vorzugsweise Verschließerkarusselle, ausgeführte Behandlungseinrichtungen 22 (rechts in Figur 20) aufweisen. Die beiden Verschließeinrichtungen können gleich oder unterschiedlich ausgeführt sein. Die beiden Verschließeinrichtungen können mit den gleichen oder unterschiedlichen Verschlüssen (z. B. Korken, Kronkorken, Deckel oder Drehverschluss) bestückt sein. Die beiden Verschließeinrichtungen können die Behälter 12 verschließen und die verschlossenen Behälter 12 können von einem oder mehreren Abfuhrförderern abtransportiert werden.

Die Bewegungsvorrichtungen 18 können die Behälter 12 von der Füllvorrichtung übernehmen, z. B. mittels der Technik, die unter Bezugnahme auf die Figuren 18 bis 19C beschrieben wurde. Die Bewegungsvorrichtungen 18 können die Behälter 12 wahlweise zu ersten oder der zweiten Verschließeinrichtung bewegen, z. B. je nach Behandlungsprofil. Die Bewegungsvorrichtungen 18 können die Behälter 12 an die Verschließeinrichtungen übergeben.

Die Behälterbehandlungsanlage 10S kann eine Erkennungseinrichtung 90, z. B. eine Kameravorrichtung und/oder mindestens einen anderen Sensor, aufweisen. Mittels der Erkennungseinrichtung 90 kann bspw. ein Schwappverhalten der Behälter 12 analysiert bzw. überwacht werden, um ein Überschwappen der Behälter zu verhindern. Basierend auf einer Erkennung durch die Erkennungseinrichtung 90 kann der Pfad der Behälter 12 bzw. der Bewegungsvorrichtungen 18 angepasst werden. Somit kann, wie bereits unter Bezugnahme auf die Figuren 17A und 17B beschrieben wurde, bspw. die auf den jeweiligen Behälter 12 wirkende Querbeschleunigung minimiert werden, ein Risiko zum Überschwappen verringert werden, eine Teilung zwischen den Behältern 12 (Abstand der Behälter 12 zueinander) bei der Bewegung mittels der Bewegungsvorrichtungen 18 wie gewünscht auf eine Teilung der Verschließeinrichtung angepasst werden usw.

Die Figur 21 zeigt eine Behälterbehandlungsanlage 10T. Die Behälterbehandlungsanlage 10T weist eine vorzugsweise als Verschließeinrichtung ausgeführte Behandlungseinrichtung 22 (rechts in Figur 21) auf. Die Behandlungseinrichtung 22 ist als ein Rundläufer ausgeführt. Die Bewegungsvorrichtungen 18 übergeben die Behälter 12 zum Behandeln nicht an diese Behandlungseinrichtung 22, sondern Transportieren die Behälter 12 während der Behälterbehandlung durch diese Behandlungseinrichtung 22 selbst auf einer Kreisbahn um diese Behandlungseinrichtung 22. Die andere Behandlungseinrichtung 22 (links in Figur 21) kann bspw. als ein Füllerkarussell ausgeführt sein.

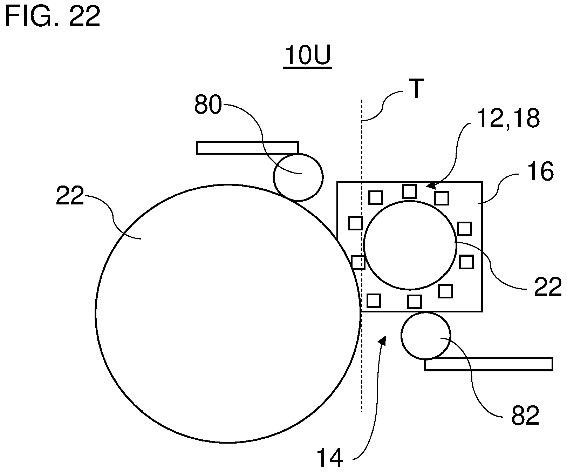

Die Figur 22 zeigt eine Behälterbehandlungsanlage 10U. Die Behälter 12 können von den Bewegungsvorrichtungen 18 nach der Übernahme von der Behandlungseinrichtung 22 auf einer Tangenten T zur Kreisbahn des als Rundläufer, vorzugsweise Füllerkarussell, ausgeführten Behandlungseinrichtung 22 zu der nächsten Behandlungseinrichtung (z. B. Verschließer) 22 bewegt werden. Vorzugsweise kann damit ein Überschwappen der Behälter 12 verhindert werden. Es ist möglich, dass die Bewegungsvorrichtungen 18 bspw. um 180° um eine eigene Achse, z. B. Hochachse, beim Bewegen zwischen den Behandlungseinrichtungen 22 gedreht werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich der Erfindung, so wie dieser in den Ansprüchen definiert ist, fallen.

**Bezugszeichenliste**

| | | | |
|---|---|---|---|
| 10A-10U | Behälterbehandlungsanlage | 76 | Überschubeinrichtung |
| 12 | Behälter | 78 | Transferstern/Karusselbehandlungseinrichtung |
| 14 | Planarantriebssystem | | |
| 16 | Grundelement | 80 | Einlauftransferstern |
| 18 | Bewegungsvorrichtung | 82 | Auslauftransferstern |
| 20 | Steuereinheit | 84 | Behandlungsstation |
| 22 | Behandlungseinrichtung | 86 | Aufstandsfläche |
| 24 | Aufzugseinrichtung | 88 | Behälterhalterung |
| 26 | Behälterförderer | 90 | Erkennungseinrichtung |
| 28 | Zweites Planarantriebssystem | | |
| 30 | Drittes Planarantriebssystem | | |
| 32 | Grundelement | | |
| 34 | Bewegungsvorrichtung | | |
| 36 | Grundelement | | |
| 38 | Bewegungsvorrichtung | | |
| 40 | Ausleitsystem | | |
| 42 | Ausleitsystem | | |
| 44 | Pufferbereich | | |
| 46 | Flüssigkeitsspeicher | | |
| 48 | Füllstandsensor | | |
| 50 | Überlagerungsgaszufuhr | | |
| 52 | Überlagerungsgasabfuhr | | |
| 54 | Flüssigkeitszufuhr | | |
| 56 | Durchflussmesser | | |
| 58 | Füllventil | | |
| 60 | Auslauf | | |
| 62 | Einlaufförderer | | |
| 64 | Auslaufförderer | | |
| 66 | Auslaufbereich | | |
| 68 | Einlaufbereich | | |
| 70 | Schubeinrichtung | | |
| 72 | Aufstandsfläche | | |
| 74 | Überschubeinrichtung | | |

## Patentansprüche

1. Behälterbehandlungsanlage (10A-10U) zur Behandlung von Behältern (12), aufweisend:
mehrere Behandlungseinrichtungen (22) zum Behandeln der Behälter (12); und
ein Planarantriebssystem (14) aufweisend ein Grundelement (16) und mehrere Bewegungsvorrichtungen (18) zum Transportieren der Behälter (12), wobei das Grundelement (16) die mehreren Behandlungseinrichtungen (22) miteinander verbindet und die mehreren Bewegungsvorrichtungen (18) bezüglich des Grundelements (16) unabhängig voneinander bewegbar sind, vorzugsweise mittels magnetischer Wechselwirkung zwischen dem Grundelement (16) und den mehreren Bewegungsvorrichtungen (18);
wobei das Planarantriebssystem (14) mittels einer Steuereinheit (20) dazu konfiguriert ist, die mehreren Bewegungsvorrichtungen (18) individuell nach jeweils einem von mehreren Behandlungsprofilen zur unterschiedlichen Behälterbehandlung zu einer Auswahl aus den mehreren Behandlungseinrichtungen (22) zu bewegen, wobei die mehreren Behandlungsprofile jeweils eine unterschiedliche Auswahl aus den mehreren Behandlungseinrichtungen (22) aufweisen,
**dadurch gekennzeichnet, dass** die mehreren Behandlungseinrichtungen (22) mindestens eines aufweisen von:
mehrere unterschiedlich ausgebildete Rinseinrichtungen zum Rinsen der Behälter (12);
mehrere unterschiedlich ausgebildete und/oder mit unterschiedlichen Füllmedien versorgte Fülleinrichtungen zum Befüllen der Behälter (12);
mehrere unterschiedlich ausgebildete und/oder mit unterschiedlichen Etiketten bestückte Etikettiereinrichtungen zum Etikettieren der Behälter (12);
mehrere unterschiedlich ausgebildete Druckeinrichtungen zum Bedrucken der Behälter (12);
mehrere unterschiedlich ausgebildete und/oder mit unterschiedlichen Verschlüssen bestückte Verschließeinrichtungen zum Verschließen der Behälter (12);
mehrere unterschiedlich ausgebildete Gruppiereinrichtungen zum Gruppieren der Behälter (12);
mehrere unterschiedlich ausgebildete und/oder mit unterschiedlichen Verpackungen bestückte Verpackungseinrichtungen zum Verpacken der Behälter (12); und
mehrere unterschiedlich ausgebildete Behälterherstelleinrichtungen oder Behälterkonditionierungseinrichtungen zum Herstellen oder Konditionieren der Behälter (12).

2. Behälterbehandlungsanlage (10A-10U) nach Anspruch 1, wobei:
die Auswahl der mehreren Behandlungsprofile jeweils mindestens zwei unterschiedliche Behandlungseinrichtungen (22) der mehreren Behandlungseinrichtungen (22) aufweist; und/oder
die mehreren Behandlungsprofile jeweils eine Reihenfolge der ausgewählten Behandlungseinrichtungen (22) aufweisen.

3. Behälterbehandlungsanlage (10A-10U) nach Anspruch 1 oder Anspruch 2, wobei die mehreren Behandlungseinrichtungen (22) ferner aufweisen:
mehrere, vorzugsweise unterschiedlich ausgebildete, Prüfeinrichtungen zum Prüfen der Behälter (12.

4. Behälterbehandlungsanlage (10G; 10H) nach einem der vorherigen Ansprüche, wobei:
das Planarantriebssystem (14) als eine Linienschnittstelle zu den mehreren Behandlungseinrichtungen (22) angeordnet ist, vorzugsweise mit dem Grundelement (16) in einer Streifenform.

5. Behälterbehandlungsanlage (10E) nach einem der vorherigen Ansprüche, wobei:
die mehreren Behandlungseinrichtungen (22) eine Rinseinrichtung zum Rinsen von Behältern (12) aufweisen; und
die mehreren Bewegungsvorrichtungen (18) in einem Abschnitt stromabwärts der Rinseinrichtung über Kopf an dem Grundelement (16) zum Ausleeren der Behälter (12) bewegbar sind.

6. Behälterbehandlungsanlage (10L) nach einem der vorherigen Ansprüche, wobei:
das Grundelement (16) horizontal ausgerichtet ist; und
die mehreren Behandlungseinrichtungen (22) zumindest teilweise direkt oberhalb des Grundelements (16) in mehreren Reihen und mehreren Spalten, vorzugsweise in einem Schachbrettmuster, angeordnet, vorzugsweise aufgehängt, sind.

7. Behälterbehandlungsanlage (10I) nach einem der vorherigen Ansprüche, ferner aufweisend:
mindestens ein weiteres Planarantriebssystem (28, 30) aufweisend ein weiteres Grundelement (32, 36) und mehrere weitere Bewegungsvorrichtungen (34, 38), die die mehreren Behandlungseinrichtungen (22) transportieren, wobei die mehreren weiteren Bewegungsvorrichtungen (34, 38) bezüglich des weiteren Grundelements (32, 36) unabhängig voneinander bewegbar sind, vorzugsweise mittels magnetischer Wechselwirkung zwischen dem weiteren Grundelement (32, 36) und den mehreren weiteren Bewegungsvorrichtungen (34, 38).

8. Behälterbehandlungsanlage (10I) nach Anspruch 7, wobei:
die Behälter (12) mittels der mehreren Bewegungsvorrichtungen (18) und die mehreren Behandlungseinrichtungen (22) mittels der mehreren weiteren Bewegungsvorrichtungen (34, 38) während der jeweiligen Behälterbehandlung gemeinsam bewegbar sind; und/oder
das Grundelement (16) und das weitere Grundelement (32, 36) geneigt, vorzugsweise senkrecht, zueinander ausgerichtet sind, wobei vorzugsweise das Grundelement (16) horizontal ausgerichtet ist.

9. Behälterbehandlungsanlage (10B) nach einem der vorherigen Ansprüche, wobei:
das Grundelement (16) mehrere vertikal voneinander beabstandete Ebenen aufweist;
die mehreren Behandlungseinrichtungen (22) zumindest teilweise auf oder an unterschiedlichen Ebenen der mehreren vertikal voneinander beabstandeten Ebenen angeordnet sind; und
die Behälterbehandlungsanlage (10B) mindestens eine Aufzugseinrichtung (24) für die mehreren Bewegungsvorrichtungen (18) aufweist, wobei die mindestens eine Aufzugseinrichtung (24) die mehreren vertikal voneinander beabstandeten Ebenen des Grundelements (16) miteinander verbindet.

10. Behälterbehandlungsanlage (10J) nach einem der vorherigen Ansprüche, ferner aufweisend:
mehrere Ausleitsysteme (40, 42), die an unterschiedlichen Positionen mit dem Planarantriebssystem (14) verbunden sind,
wobei die mehreren Behandlungseinrichtungen (22) mehrere unterschiedlich ausgebildete Prüfeinrichtungen zum Prüfen unterschiedlicher Merkmale der Behälter (12) aufweisen, und
das Planarantriebssystem (14) mittels der Steuereinheit (20) dazu konfiguriert ist, in Abhängigkeit von einer mittels einer der mehreren Prüfeinrichtungen ermittelten Beanstandung den jeweils beanstandeten Behälter (12) mittels einer der Bewegungsvorrichtungen (18) zu einem der ermittelten Beanstandung zugeordnetem Ausleitsystem der mehreren Ausleitsysteme (40, 42) zu bewegen.

11. Behälterbehandlungsanlage (10M) nach einem der vorherigen Ansprüche, wobei die mehreren Bewegungsvorrichtungen (18) jeweils eine Aufstandsfläche (72) für die Behälter (12) aufweisen, die durch mehrere Stege gebildet ist, und die Behälterbehandlungsanlage (10M) ferner aufweist:
einen Einlaufförderer (62) mit einem kammförmigen Auslaufbereich (66), wobei das Planarantriebssystem (14) mittels der Steuereinheit (20) dazu konfiguriert ist, dass die mehreren Bewegungsvorrichtungen (18) zur Behälterübernahme eine Hubbewegung relativ zum Grundelement (16) beim kammförmigen Auslaufbereich (66) durchführen, sodass die mehreren Stege durch den kammförmigen Auslaufbereich (66) hindurchtreten; und/oder
einen Auslaufförderer (64) mit einem kammförmigen Einlaufbereich (68), wobei das Planarantriebssystem (14) mittels der Steuereinheit (20) dazu konfiguriert ist, dass die mehreren Bewegungsvorrichtungen (18) zur Behälterübergabe eine Hubbewegung relativ zum Grundelement (16) beim kammförmigen Einlaufbereich (68) durchführen, sodass die mehreren Stege aus dem kammförmigen Einlaufbereich (68) austreten.

12. Behälterbehandlungsanlage (10N) nach einem der Ansprüche 1 bis 10, ferner aufweisend:
einen Einlaufförderer (62) mit einem Auslaufbereich (66') aufweisend eine angeschrägte Unterseite,
wobei das Planarantriebssystem (14) mittels der Steuereinheit (20) dazu konfiguriert ist, die mehreren Bewegungsvorrichtungen (18) zur Behälterübernahme geneigt und mittels einer Hubbewegung relativ zum Grundelement (16) entlang der angeschrägten Unterseite des Auslaufbereichs (66') zu bewegen und direkt stromabwärts des Auslaufbereichs (66') zur Behälterübernahme vom Auslaufbereich (66') aufzutauchen.

13. Behälterbehandlungsanlage (10O) nach einem der Ansprüche 1 bis 10, ferner aufweisend:
einen Einlaufförderer (62) mit einem Auslaufbereich (66") und einer Überschubeinrichtung (74), die sich quer über den Auslaufbereich (66") erstreckt, wobei das Planarantriebssystem (14) mittels der Steuereinheit (20) dazu konfiguriert ist, die mehreren Bewegungsvorrichtungen (18) zur Behälterübernahme seitlich neben dem Auslaufbereich (66") zu bewegen und die mittels der Überschubeinrichtung (74) runter von dem Auslaufbereich (66") geschobenen Behälter (12) zu empfangen; und/oder
einen Auslaufförderer (64) mit einem Einlaufbereich (68") und einer Überschubeinrichtung (76), die sich über dem Grundelement (16) und seitlich von dem Einlaufbereich (68") erstreckt, wobei das Planarantriebssystem (14) mittels der Steuereinheit (20) dazu konfiguriert ist, die mehreren Bewegungsvorrichtungen (18) zur Behälterübergabe seitlich neben dem Einlaufbereich (68") zu bewegen und die Behälter (12) mittels der Überschubeinrichtung (76) an den Einlaufbereich (68") zu übergeben.

14. Behälterbehandlungsanlage (10M, 10N; 10O) nach einem der Ansprüche 11 bis 13, wobei:
das Planarantriebssystem (14) mittels der Steuereinheit (20) dazu konfiguriert ist, dass sich die mehreren Bewegungsvorrichtungen (18) auf eine Geschwindigkeit der zu übernehmenden Behälter (12) auf dem Auslaufbereich (66, 66', 66") bei der Behälterübernahme aufsynchronisieren.

15. Behälterbehandlungsanlage (10M) nach einem der vorherigen Ansprüche, wobei:
das Planarantriebssystem (14) mittels der Steuereinheit (20) dazu konfiguriert ist, die mehreren Bewegungsvorrichtungen (18) bei einer Beschleunigung und/oder bei einer Kurvenfahrt relativ zu dem Grundelement (16) zu neigen, vorzugweise in einem Maße zum Verhindern eines Überschwappens und/oder Umkippens der transportierten Behälter (12); und/oder
das Planarantriebssystem (14) mittels der Steuereinheit (20) dazu konfiguriert ist, einen Bewegungspfad der mehreren Bewegungsvorrichtungen (18) derart anzupassen, dass eine Querbeschleunigung auf die transportierten Behälter (12) unter einen vorbestimmten Grenzwert verringert wird, vorzugweise zum Verhindern eines Überschwappens und/oder Umkippens der transportierten Behälter (12); und/oder
das Planarantriebssystem (14) mittels der Steuereinheit (20) dazu konfiguriert ist, eine Teilung der transportierten Behälter (12) an eine Teilung einer Ziel-Behandlungseinrichtung der mehreren Behandlungseinrichtungen (22) mittels der Bewegungsvorrichtungen (18) anzupassen.

16. Behälterbehandlungsanlage (10R) nach einem der vorherigen Ansprüche, wobei:
die mehreren Bewegungsvorrichtungen (18) jeweils eine Aufstandsfläche (72) für die Behälter (12), die durch mehrere Stege gebildet ist, und optional eine Behälterhalterung (88), vorzugsweise Behälterhalshalterung, aufweisen,
wobei die Behälter (12) vorzugsweise zwischen der Aufstandsfläche (72) und der Behälterhalterung (88) der jeweiligen Bewegungsvorrichtung (18) einspannbar sind.

17. Behälterbehandlungsanlage (10R) nach Anspruch 16, wobei:
mindestens eine Behandlungseinrichtung (22) mehrere Behandlungsstationen (84), die jeweils eine durch mehrere Stege gebildete Aufstandsfläche (86) für die Behälter (12) aufweist; und
das Planarantriebssystem (14) mittels der Steuereinheit (20) dazu konfiguriert ist, dass die mehreren Bewegungsvorrichtungen (18) zur Behälterübernahme und/oder zur Behälterübergabe eine Hubbewegung und/oder eine Neigebewegung relativ zum Grundelement (16) bei der Aufstandsfläche (86) der jeweiligen Behandlungsstation (84) durchführen, sodass die Aufstandsfläche (72) der jeweiligen Bewegungsvorrichtung (18) durch die Aufstandsfläche (86) der jeweiligen Behandlungsstation (84) hindurchtritt und/oder die Aufstandsfläche (72) der jeweiligen Bewegungsvorrichtung (18) und die Aufstandsfläche (86) der jeweiligen Behandlungsstation (84) miteinander kämmen.

## Claims

1. A container treatment plant (10A-10U) for treating containers (12), comprising:
several treatment devices (22) for treating the containers (12); and
a planar drive system (14) comprising a main element (16) and several movement apparatuses (18) for transporting the containers (12), wherein the main element (16) connects the several treatment devices (22) to one another and the several movement apparatuses (18) are movable independently of one another with respect to the main element (16), preferably by magnetic interaction between the main element (16) and the several movement apparatuses (18);
wherein the planar drive system (14) is configured by a control unit (20) to move the several movement apparatuses (18) individually according to one of several treatment profiles for different container treatment to a selection from the several treatment devices (22), wherein the several treatment profiles each have a different selection from the several treatment devices (22),
**characterized in that**
the several treatment devices (22) have at least one of:
several differently configured rinsing devices for rinsing the containers (12);
several differently configured filling devices and/or filling devices supplied with different filling media for filling the containers (12);
several differently configured labelling devices and/or labelling devices equipped with different labels for labelling the containers (12);
several differently configured printing devices for printing the containers (12);
several differently configured closing devices and/or closing devices equipped with different closures for closing the containers (12);
several differently configured grouping devices for grouping the containers (12);
several differently configured packaging devices and/or packaging devices equipped with different packaging for packaging the containers (12); and
several differently configured container producing devices or container conditioning devices for producing or conditioning the containers (12).

2. The container treatment plant (10A-10U) according to claim 1, wherein:
the selection of the several treatment profiles each comprises at least two different treatment devices (22) of the several treatment devices (22); and/or
the several treatment profiles each have an order of the selected treatment devices (22).

3. The container treatment plant (10A-10U) according to claim 1 or claim 2, wherein the several treatment devices (22) further comprise:
several, preferably differently configured, testing devices for testing the containers (12.

4. The container treatment plant (10G; 10H) according to any of the preceding claims, wherein:
the planar drive system (14) is arranged as a line interface to the several treatment devices (22), preferably with the main element (16) in a strip shape.

5. The container treatment plant (10E) according to any of the preceding claims, wherein:
the several treatment devices (22) comprise a rinsing device for rinsing containers (12); and
the several movement apparatuses (18) are movable overhead on the main element (16) in a portion downstream of the rinsing device for emptying the containers (12).

6. The container treatment plant (10L) according to any of the preceding claims, wherein:
the main element (16) is aligned horizontally; and
the several treatment devices (22) are arranged, preferably suspended, at least partially directly above the main element (16) in several rows and several columns, preferably in a checkerboard pattern.

7. The container treatment plant (101) according to any of the preceding claims, further comprising:
at least one further planar drive system (28, 30) comprising a further main element (32, 36) and several further movement apparatuses (34, 38) which transport the several treatment devices (22), wherein the several further movement apparatuses (34, 38) are movable independently of one another with respect to the further main element (32, 36), preferably by magnetic interaction between the further main element (32, 36) and the several further movement apparatuses (34, 38).

8. The container treatment plant (101) according to claim 7, wherein:
the containers (12) are movable together by the several movement apparatuses (18) and the several treatment devices (22) are movable together by the several further movement apparatuses (34, 38) during the particular container treatment; and/or
the main element (16) and the further main element (32, 36) are inclined, preferably perpendicular, to one another, wherein the main element (16) is preferably aligned horizontally.

9. The container treatment plant (10B) according to any of the preceding claims, wherein:
the main element (16) comprises several planes which are vertically spaced apart from one another;
the several treatment devices (22) are arranged at least partially on or at different planes of the several vertically spaced-apart planes; and
the container treatment plant (10B) has at least one elevator device (24) for the several movement apparatuses (18), wherein the at least one elevator device (24) connects the several vertically spaced-apart planes of the main element (16) to one another.

10. The container treatment plant (10J) according to any of the preceding claims, further comprising:
several discharge systems (40, 42) connected to the planar drive system (14) at different positions,
wherein the several treatment devices (22) comprise several differently configured testing devices for testing different features of the containers (12), and
the planar drive system (14) is configured by the control unit (20), depending on a defect determined by one of the several testing devices, to move the particular defective container (12) by one of the movement apparatuses (18) to a discharge system of the several discharge systems (40, 42) assigned to the determined defect.

11. The container treatment plant (10M) according to any of the preceding claims, wherein the several movement apparatuses (18) each have a support surface (72) for the containers (12), which is formed by several webs, and the container treatment plant (10M) further comprises:
an inlet conveyor (62) having a comb-shaped outlet region (66), wherein the planar drive system (14) is configured by the control unit (20) such that the several movement apparatuses (18) for container takeover perform a lifting movement relative to the main element (16) at the comb-shaped outlet region (66), so that the several webs pass through the comb-shaped outlet region (66); and/or
an outlet conveyor (64) having a comb-shaped inlet region (68), wherein the planar drive system (14) is configured by the control unit (20) such that the several movement apparatuses (18) for container transfer perform a lifting movement relative to the main element (16) at the comb-shaped inlet region (68), so that the several webs emerge from the comb-shaped inlet region (68).

12. The container treatment plant (10N) according to any of claims 1 to 10, further comprising:
an inlet conveyor (62) having an outlet region (66') which has a beveled underside,
wherein the planar drive system (14) is configured by the control unit (20) to move the several movement apparatuses (18) for container takeover inclined and by a lifting movement relative to the main element (16) along the beveled underside of the outlet region (66') and to emerge directly downstream of the outlet region (66') for container takeover from the outlet region (66').

13. The container treatment plant (10O) according to any of claims 1 to 10, further comprising:
an inlet conveyor (62) having an outlet region (66") and a transfer device (74) extending transversely across the outlet region (66"), wherein the planar drive system (14) is configured by the control unit (20) to move the several movement apparatuses (18) for container takeover laterally next to the outlet region (66") and to receive the containers (12) pushed down from the outlet region (66") by the transfer device (74); and/or
an outlet conveyor (64) having an inlet region (68") and a transfer device (76) extending above the main element (16) and laterally from the inlet region (68"), wherein the planar drive system (14) is configured by the control unit (20) to move the several movement apparatuses (18) for container transfer laterally next to the inlet region (68") and to transfer the containers (12) to the inlet region (68") by the transfer device (76).

14. The container treatment plant (10M, 10N; 10O) according to any of claims 11 to 13, wherein:
the planar drive system (14) is configured by the control unit (20) so that the several movement apparatuses (18) synchronize to a speed of the containers (12) to be taken over on the outlet region (66, 66', 66") during the container takeover.

15. The container treatment plant (10M) according to any of the preceding claims, wherein:
the planar drive system (14) is configured by the control unit (20) to incline the several movement apparatuses (18) during acceleration and/or cornering relative to the main element (16), preferably to an extent to prevent the transported containers (12) from spilling over and/or tipping over; and/or
the planar drive system (14) is configured by the control unit (20) to adapt a movement path of the several movement apparatuses (18) such that a lateral acceleration on the transported containers (12) is reduced below a predetermined limit value, preferably to prevent the transported containers (12) from spilling over and/or tipping over; and/or
the planar drive system (14) is configured by the control unit (20) to adapt a division of the transported containers (12) to a division of a target treatment device of the several treatment devices (22) by the movement apparatuses (18).

16. The container treatment plant (10R) according to any of the preceding claims, wherein:
the several movement apparatuses (18) each have a support surface (72) for the containers (12), which is formed by several webs, and optionally a container holder (88), preferably a container neck holder,
wherein the containers (12) can preferably be clamped between the support surface (72) and the container holder (88) of the particular movement apparatus (18).

17. The container treatment plant (10R) according to claim 16, wherein:
at least one treatment device (22) several treatment stations (84), each of which has a support surface (86) formed by several webs for the containers (12); and
the planar drive system (14) is configured by the control unit (20) such that the several movement apparatuses (18) for container takeover and/or container transfer perform a lifting movement and/or a tilting movement relative to the main element (16) at the support surface (86) of the particular treatment station (84), so that the support surface (72) of the particular movement apparatus (18) passes through the support surface (86) of the particular treatment station (84) and/or the support surface (72) of the particular movement apparatus (18) and the support surface (86) of the particular treatment station (84) mesh with one another.

## Revendications

1. Installation de traitement de récipients (10A-10U) pour le traitement de récipients (12), présentant :
plusieurs appareils de traitement (22) pour le traitement des récipients (12) ; et
un système d'entraînement plan (14) présentant un élément formant base (16) et plusieurs dispositifs de déplacement (18) pour le transport des récipients (12), dans laquelle l'élément formant base (16) relie les appareils de traitement (22) entre eux et les dispositifs de déplacement (18) peuvent être déplacés indépendamment les uns des autres par rapport à l'élément formant base (16), de préférence au moyen d'une interaction magnétique entre l'élément formant base (16) et les dispositifs de déplacement (18) ;
dans laquelle le système d'entraînement plan (14) est conçu pour, au moyen d'une unité de commande (20), déplacer les dispositifs de déplacement (18) individuellement vers une sélection parmi les appareils de traitement (22), respectivement selon un profil de traitement parmi plusieurs profils de traitement pour un traitement de récipients différent, dans laquelle les profils de traitement présentent respectivement une sélection différente parmi les appareils de traitement (22),
**caractérisée en ce que**
les appareils de traitement (22) présentent au moins l'un parmi :
plusieurs appareils de rinçage de réalisations différentes pour le rinçage des récipients (12) ;
plusieurs appareils de remplissage de réalisations différentes et/ou alimentés en différents milieux de remplissage pour le remplissage des récipients (12) ;
plusieurs appareils d'étiquetage de réalisations différentes et/ou équipés d'étiquettes différentes pour l'étiquetage des récipients (12) ;
plusieurs appareils d'impression de réalisations différentes pour l'impression des récipients (12) ;
plusieurs appareils de fermeture de réalisations différentes et/ou équipés de fermetures différentes pour la fermeture des récipients (12) ;
plusieurs appareils de regroupement de réalisations différentes pour le regroupement des récipients (12) ;
plusieurs appareils d'emballage de réalisations différentes et/ou équipés d'emballages différents pour l'emballage des récipients (12) ; et
plusieurs appareils de fabrication de récipients ou appareils de conditionnement de récipients de réalisations différentes pour la fabrication ou le conditionnement des récipients (12).

2. Installation de traitement de récipients (10A-10U) selon la revendication 1, dans laquelle :
la sélection des profils de traitement présente respectivement au moins deux appareils de traitement (22) différents parmi les appareils de traitement (22) ; et/ou
les profils de traitement présentent respectivement un ordre des appareils de traitement (22) sélectionnés.

3. Installation de traitement de récipients (10A-10U) selon la revendication 1 ou la revendication 2, dans laquelle les appareils de traitement (22) présentent en outre :
plusieurs appareils de contrôle, de préférence de réalisations différentes, pour le contrôle des récipients (12).

4. Installation de traitement de récipients (10G ; 10H) selon l'une des revendications précédentes, dans laquelle :
le système d'entraînement plan (14) est disposé comme une interface linéaire avec les appareils de traitement (22), de préférence avec l'élément formant base (16) sous forme de bande.

5. Installation de traitement de récipients (10E) selon l'une des revendications précédentes, dans laquelle :
les appareils de traitement (22) présentent un appareil de rinçage pour le rinçage de récipients (12) ; et
les dispositifs de déplacement (18) peuvent être déplacés dans une section en aval de l'appareil de rinçage en hauteur au niveau de l'élément formant base (16) pour vider les récipients (12).

6. Installation de traitement de récipients (10L) selon l'une des revendications précédentes, dans laquelle :
l'élément formant base (16) est orienté horizontalement ; et
les appareils de traitement (22) sont disposés, de préférence suspendus, au moins partiellement directement au-dessus de l'élément formant base (16) en plusieurs rangées et plusieurs colonnes, de préférence selon un motif en damier.

7. Installation de traitement de récipients (101) selon l'une des revendications précédentes, présentant en outre :
au moins un autre système d'entraînement plan (28, 30) présentant un autre élément formant base (32, 36) et plusieurs autres dispositifs de déplacement (34, 38) qui transportent les appareils de traitement (22), dans laquelle les autres dispositifs de déplacement (34, 38) peuvent être déplacés indépendamment les uns des autres par rapport à l'autre élément formant base (32, 36), de préférence au moyen d'une interaction magnétique entre l'autre élément formant base (32, 36) et les autres dispositifs de déplacement (34, 38).

8. Installation de traitement de récipients (101) selon la revendication 7, dans laquelle :
les récipients (12) peuvent être déplacés ensemble au moyen des dispositifs de déplacement (18) et les appareils de traitement (22) peuvent être déplacés ensemble au moyen des autres dispositifs de déplacement (34, 38) pendant le traitement de récipients respectif ; et/ou
l'élément formant base (16) et l'autre élément formant base (32, 36) sont orientés de manière inclinée, de préférence perpendiculairement, l'un par rapport à l'autre, dans laquelle l'élément formant base (16) est de préférence orienté horizontalement.

9. Installation de traitement de récipients (10B) selon l'une des revendications précédentes, dans laquelle :
l'élément formant base (16) présente plusieurs plans espacés verticalement les uns des autres ;
les appareils de traitement (22) sont disposés au moins partiellement sur différents plans parmi les plans espacés verticalement les uns des autres ou au niveau de ceux-ci ; et
l'installation de traitement de récipients (10B) présente au moins un appareil élévateur (24) pour les dispositifs de déplacement (18), dans laquelle l'au moins un appareil élévateur (24) relie entre eux les plans espacés verticalement les uns des autres de l'élément formant base (16).

10. Installation de traitement de récipients (10J) selon l'une des revendications précédentes, présentant en outre :
plusieurs systèmes d'extraction (40, 42) reliés au système d'entraînement plan (14) à différentes positions,
dans laquelle les appareils de traitement (22) présentent plusieurs appareils de contrôle de réalisations différentes pour le contrôle de différentes caractéristiques des récipients (12), et
le système d'entraînement plan (14) est conçu pour, au moyen de l'unité de commande (20), déplacer, en fonction d'une contestation déterminée au moyen de l'un des appareils de contrôle, le récipient (12) respectivement contesté au moyen de l'un des dispositifs de déplacement (18) vers un système d'extraction parmi les systèmes d'extraction (40, 42) associé à la contestation déterminée.

11. Installation de traitement de récipients (10M) selon l'une des revendications précédentes, dans laquelle les dispositifs de déplacement (18) présentent respectivement une surface d'appui (72) pour les récipients (12), laquelle est formée par plusieurs entretoises, et l'installation de traitement de récipients (10M) présente en outre :
un convoyeur d'entrée (62) comportant une zone de sortie (66) en forme de peigne, dans laquelle le système d'entraînement plan (14) est conçu pour, au moyen de l'unité de commande (20), que, pour la prise en charge de récipients, les dispositifs de déplacement (18) effectuent un mouvement de levage par rapport à l'élément formant base (16) au niveau de la zone de sortie (66) en forme de peigne, de sorte que les entretoises passent à travers la zone de sortie (66) en forme de peigne ; et/ou
un convoyeur de sortie (64) comportant une zone d'entrée (68) en forme de peigne, dans laquelle le système d'entraînement plan (14) est conçu pour, au moyen de l'unité de commande (20), que, pour le transfert de récipients, les dispositifs de déplacement (18) effectuent un mouvement de levage par rapport à l'élément formant base (16) au niveau de la zone d'entrée (68) en forme de peigne, de sorte que les entretoises sortent de la zone d'entrée (68) en forme de peigne.

12. Installation de traitement de récipients (10N) selon l'une des revendications 1 à 10, présentant en outre :
un convoyeur d'entrée (62) comportant une zone de sortie (66') présentant une face inférieure inclinée,
dans laquelle le système d'entraînement plan (14) est conçu pour, au moyen de l'unité de commande (20), déplacer les dispositifs de déplacement (18) pour le transfert de récipients de manière inclinée et au moyen d'un mouvement de levage par rapport à l'élément formant base (16) le long de la face inférieure inclinée de la zone de sortie (66'), et pour émerger directement en aval de la zone de sortie (66') pour le transfert de récipients depuis la zone de sortie (66').

13. Installation de traitement de récipients (10O) selon l'une des revendications 1 à 10, présentant en outre :
un convoyeur d'entrée (62) comportant une zone de sortie (66") et un appareil de transfert (74) s'étendant transversalement au-dessus de la zone de sortie (66"), dans laquelle le système d'entraînement plan (14) est conçu pour, au moyen de l'unité de commande (20), déplacer les dispositifs de déplacement (18) pour la prise en charge de récipients latéralement à côté de la zone de sortie (66") et pour recevoir les récipients (12) poussés vers le bas à partir de la zone de sortie (66") au moyen de l'appareil de transfert (74) ; et/ou
un convoyeur de sortie (64) comportant une zone d'entrée (68") et un appareil de transfert (76) s'étendant au-dessus de l'élément formant base (16) et latéralement à partir de la zone d'entrée (68"), dans laquelle le système d'entraînement plan (14) est conçu pour, au moyen de l'unité de commande (20), déplacer les dispositifs de déplacement (18) pour le transfert de récipients latéralement à côté de la zone d'entrée (68") et pour transférer les récipients (12) à la zone d'entrée (68") au moyen de l'appareil de transfert (76).

14. Installation de traitement de récipients (10M, 10N ; 10O) selon l'une des revendications 11 à 13, dans laquelle :
le système d'entraînement plan (14) est conçu pour, au moyen de l'unité de commande (20), que les dispositifs de déplacement (18) se synchronisent avec une vitesse des récipients (12) à prendre en charge sur la zone de sortie (66, 66', 66") lors de la prise en charge de récipients.

15. Installation de traitement de récipients (10M) selon l'une des revendications précédentes, dans laquelle :
le système d'entraînement plan (14) est conçu pour, au moyen de l'unité de commande (20), incliner les dispositifs de déplacement (18) par rapport à l'élément formant base (16) lors d'une accélération et/ou lors d'un virage, de préférence dans une mesure permettant d'éviter un débordement et/ou un basculement des récipients (12) transportés ; et/ou
le système d'entraînement plan (14) est conçu pour, au moyen de l'unité de commande (20), adapter un trajet de déplacement des dispositifs de déplacement (18) de telle sorte qu'une accélération transversale sur les récipients (12) transportés est réduite en dessous d'une valeur limite prédéterminée, de préférence pour empêcher un débordement et/ou un basculement des récipients (12) transportés ; et/ou
le système d'entraînement plan (14) est conçu pour, au moyen de l'unité de commande (20), adapter un pas des récipients (12) transportés à un pas d'un appareil de traitement cible parmi les appareils de traitement (22) au moyen des dispositifs de déplacement (18).

16. Installation de traitement de récipients (10R) selon l'une des revendications précédentes, dans laquelle :
les dispositifs de déplacement (18) présentent respectivement une surface d'appui (72) pour les récipients (12), laquelle est formée par plusieurs entretoises, et éventuellement un support pour récipients (88), de préférence un support pour col de récipients,
dans laquelle les récipients (12) peuvent de préférence être serrés entre la surface d'appui (72) et le support pour récipients (88) du dispositif de déplacement (18) respectif.

17. Installation de traitement de récipients (10R) selon la revendication 16, dans laquelle :
au moins un appareil de traitement (22) plusieurs postes de traitement (84) qui présentent respectivement une surface d'appui (86) formée par plusieurs entretoises pour les récipients (12) ; et
le système d'entraînement plan (14) est conçu pour, au moyen de l'unité de commande (20), que, pour la prise en charge de récipients et/ou pour le transfert de récipients, les dispositifs de déplacement (18) effectuent un mouvement de levage et/ou un mouvement d'inclinaison par rapport à l'élément formant base (16) au niveau de la surface d'appui (86) du poste de traitement (84) respectif, de sorte que la surface d'appui (72) du dispositif de déplacement (18) respectif traverse la surface d'appui (86) du poste de traitement (84) respectif et/ou que la surface d'appui (72) du dispositif de déplacement (18) respectif et la surface d'appui (86) du poste de traitement (84) respectif s'engrènent l'une dans l'autre.
